(19) Europäisches Patentamt / European Patent Office / Office européen des brevets

(11) **EP 4 377 080 B1**

(12) # EUROPÄISCHE PATENTSCHRIFT

(45) Veröffentlichungstag und Bekanntmachung des Hinweises auf die Patenterteilung:
**28.05.2025 Patentblatt 2025/22**

(21) Anmeldenummer: **22747349.3**

(22) Anmeldetag: **21.07.2022**

(51) Internationale Patentklassifikation (IPC):
***B32B 3/26*** (2006.01) ***B32B 5/02*** (2006.01)
***B32B 5/18*** (2006.01) ***B32B 5/26*** (2006.01)
***B32B 15/04*** (2006.01) ***B32B 15/14*** (2006.01)
***B32B 15/20*** (2006.01) ***B32B 17/04*** (2006.01)

(52) Gemeinsame Patentklassifikation (CPC):
**B32B 5/022; B32B 3/266; B32B 5/024; B32B 5/18; B32B 5/266; B32B 5/275; B32B 15/046; B32B 15/14; B32B 15/20; B32B 17/04;** B32B 2260/021; B32B 2260/046; B32B 2262/0207; B32B 2262/101; B32B 2266/0242; (Forts.)

(86) Internationale Anmeldenummer:
**PCT/EP2022/070506**

(87) Internationale Veröffentlichungsnummer:
**WO 2023/006578 (02.02.2023 Gazette 2023/05)**

(54) **STANZLING INSBESONDERE ZUM DAUERHAFTEN VERSCHLIESSEN VON LÖCHERN**
PUNCHED ARTICLE, IN PARTICULAR FOR PERMANENTLY CLOSING HOLES
ARTICLE PERFORÉ, EN PARTICULIER POUR LA FERMETURE PERMANENTE DE TROUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2021 DE 102021208046**

(43) Veröffentlichungstag der Anmeldung:
**05.06.2024 Patentblatt 2024/23**

(73) Patentinhaber: **TESA SE**
**22848 Norderstedt (DE)**

(72) Erfinder:
- **MEYER, Katja**
  **22523 Hamburg (DE)**
- **BAUMANN, Tim**
  **20257 Hamburg (DE)**
- **NAGEL, Christoph**
  **22417 Hamburg (DE)**

(74) Vertreter: **tesa SE**
**Hugo-Kirchberg-Straße 1**
**22848 Norderstedt (DE)**

(56) Entgegenhaltungen:
**WO-A1-2015/024725**
**DE-A1- 102004 018 047**
**DE-A1- 102004 055 324**
**DE-A1- 102016 201 565**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



**(Forts. nächste Seite)**

(52) Gemeinsame Patentklassifikation (CPC): (Forts.)
B32B 2307/102; B32B 2405/00; B32B 2605/08

## Beschreibung

Die vorliegende Erfindung betrifft einen Stanzling insbesondere zum dauerhaften Verschließen von Öffnungen wie Löchern, die sich vorzugsweise in Blechen oder in Kunststoffteilen von insbesondere Fahrzeugen befinden, sowie ein Verfahren zum dauerhaften Verschließen von Löchern.

Bei der Fertigung von komplexeren Gebilden aus Metallblechen und/oder Kunststoffen lässt es sich konstruktiv nicht vermeiden, dass in die Bleche oder Kunststoffe Löcher geschnitten werden müssen, um an dahinter liegende Hohlräume, sei es zum Lackieren oder sei es zum Verschweißen, zu gelangen.

Diese Löcher sind nach dem Abschluss des gewünschten Prozesses zumeist nicht mehr erforderlich, oftmals sogar störend, weil durch sie Luft, Luftfeuchtigkeit oder Wasser in das Gebilde eindringen kann, was beispielsweise zu Oxidationsprozessen (Rost) führen kann.

Eine einfache Lösung zur Vermeidung dieser Probleme besteht darin, die Löcher nach Gebrauch wieder zu verschließen.

Gerade bei der Produktion von modernen Fahrzeugen wie Wasserfahrzeugen, Landfahrzeugen (Lastkraftwagen, Automobilen usw.), Luftfahrzeugen, Raumfahrzeugen, Kombinationen hiervon, zum Beispiel Amphibienfahrzeugen, ist es unumgänglich, dass während des Zusammenbaus in vielen einzelnen Teilen aus Blechen oder Kunststoffen unterschiedlich große Löcher erforderlich sind. Üblicherweise liegen die Durchmesser der Löcher zwischen 5 und 50 mm. Viele dieser Löcher müssen im späteren Prozess wieder luft- und insbesondere wasserdicht verschlossen werden, um besagte Korrossionsangriffe zu unterbinden.

Daneben besteht die Anforderung, durch das Verschließen der Löcher die Geräuschdämmung des Passagierinnenraums erheblich zu verbessern.

Im Folgenden werden die der Erfindung zugrunde liegenden Probleme sowie deren Lösung am Beispiel der Karosserie eines Automobils beschrieben. Dies stellt ausdrücklich keine Beschränkung des Erfindungsgedankens auf diese Anwendung dar. Diese Anwendung ist Teil des technischen Feldes, auf dem die Erfindung besonders vorteilhaft zum Tragen kommt.

Wenn ab jetzt die Verwendung in einer Karosserie genannt ist, liest der Fachmann alle anderen Anwendungsmöglichkeiten außerhalb einer Karosserie mit.

Im Automobilbau müssen Löcher an verschiedenen Stellen in der Karosserie gesetzt beziehungsweise ausgestanzt werden. In der Regel erfolgt dies beim Stanz- und Umformungsprozess der einzelnen Blech- oder Aluminiumteile, weiter können auch Löcher in Kunststoffbauteilen gebohrt werden. Anschließend werden mittels verschiedener Fügeprozesse die einzelnen Metallteile miteinander verbunden, und es entsteht die Rohkarosse. Die darin befindlichen Löcher, Öffnungen oder Durchbrüche dienen unter anderem als Lackablauflöcher (zum Beispiel für KTL-Lacke), Wachsinjektionslöcher, Wachsablauflöcher, Löcher für spätere Verschraubungen in der Montage oder für Kabeldurchführungen. Viele dieser Löcher müssen nach dem Trocknen des kathodischen Tauchlackes wieder verschlossen werden oder auch nach dem finalen Klarlack-Prozess (dann würde der Lochverschluss im Montageprozess stattfinden).

Die Notwendigkeit eines Lochverschlusses kann viele Ursachen haben, zum Beispiel:

- Feuchtigkeit
- Akustik
- Korrosionsschutz

In der Regel werden die Löcher beziehungsweise Öffnungen mittels Spritzgussteilen (Stopfen) aus verschiedenen, je nach Anforderungsprofil angefertigten Kunststoffen verschlossen. Das können zum Beispiel Stopfen aus PET, ABS, PP, PVC, EPDM, PA und weitere gängige im Markt befindliche Kunststoffe oder auch Kombinationen aus den genannten Materialien und marktübliche hier nicht aufgeführte Kunststoffsubstrate sein. Im Einsatz finden sich auch Materialien, die einen Anteil von Glasfasern besitzen; denkbar sind auch Carbonfasern, die eine Verstärkung des Stopfens zum Beispiel gegen das Durchstoßen bieten. Grundsätzlich sind alle gängigen Kunststoffsubstrate möglich, solange diese bestimmte Parameter zu Lackierbarkeit, Temperaturstabilität, Formstabilität unter klimatischen Bedingungen bieten und auch eine gewisse Wirtschaftlichkeit im Herstellungsprozess der Stopfen erfüllen.

Momentan werden zum Verschließen von Karosserielöchern in der Regel Kunststoffstopfen verwendet, die zum einen im Einzelfall nicht sicher das Loch verschließen und zum anderen vergleichsweise aufwändig und teuer herzustellen sind.

Für jede Lochgröße ist ein spezieller, auf die Lochgröße angepaßter Stopfen erforderlich. Dies bedeutet hohen logistischen und verwaltungstechnischen Aufwand für den Abnehmer der Stopfen. So muss an der Produktionslinie eine große Anzahl von Stopfen verschiedener Größen in jeweils zugeordneten Lagerkästen vorgehalten werden.

Des Weiteren eignen sich zu diesem Zweck Klebebänder, die angepaßt auf die Lochgröße abgelängt oder gestanzt werden. Aber auch Klebebänder werden den im Markt steigenden Anforderungen nicht immer gerecht.

Hier sollen die selbstklebenden Lochverschlüsse, die eine akustische Wirkung erzielen müssen, näher betrachtet werden.

Oft werden diese akustikrelevanten Lochverschlüsse in der Montage eingesetzt, um in der Fahrgastzelle einen abgeschotteten Bereich, den Fahrzeuginnenraum, zu erzielen. Eine im Fahrzeuginnenraum störende Akustik wird zum Beispiel durch Abrollgeräusche der Reifen oder auch durch Rollsplitt sowie kleine Steinchen erzeugt, die gegen die Fahrzeugbeplankung und auch gegen die Fahrzeugträger geschleudert werden. Weiter können auch Windgeräusche, die durch strömungstechnisch ungünstiges Design entstehen, eine Ursache von höherem, unerwünschtem Geräuschpegel in der Fahrgastzelle sein.

Oft wird der durch Rollsplitt, Steinchen, Abrollgeräusche der Reifen und auch durch Bodenunebenheiten verursachte Schall in den Hohlräumen der Trägersysteme (Längs- und Querträger) in den Fahrzeuginnenraum beziehungsweise die Fahrgastzelle weitergeleitet. Dies führt dazu, dass akustisch wirksame Produkte auch außerhalb des Fahrzeuges zum Einsatz kommen müssen. Zum Beispiel ist ein wirksamer Akustikschutz, Löcher in der Bodengruppe beziehungsweise in der Fahrzeugplattform abzukleben. Oft sind Löcher, Ausstanzungen oder Bohrungen in den Längs- und Querträgern eingebracht. Hier muss besonders darauf geachtet werden, dass jede mögliche Öffnung sorgfältig verschlossen wird.

Wie schon vorab beschrieben, dienen viele Löcher in den Karosserieblechteilen, beziehungsweise den Trägersystemen dazu, dass der KTL-Lack möglichst schnell aus der Karosserie und allen Arten von Hohlräumen ablaufen kann, um Prozesszeit zu sichern. Im Umkehrschluss bedeutet das, dass unmittelbar nach dem KTL-Trockner die Öffnungen und Löcher sicher verschlossen werden müssen. In der Regel wird dies in der sogenannten PVC-Linie vollzogen. Bei diesem Bereich handelt es sich um einen Fertigungsschritt, der vor dem Füller-Lackieren beziehungsweise vor dem Basislack-Lackieren stattfindet. Somit ist ein weiteres zu erfüllendes Merkmal die Überlackierbarkeit von Produkten, die in diesem Produktionsabschnitt zum Einsatz kommen. Weiter muss eine Kompatibilität zu PVC-Nahtabdichtmaterial gewährleistet sein, da zwischen KTL-Trockner und der nächsten Lackschicht Spalte mit pumpbaren PVC-Massen abgedichtet werden.

Produkte zum Lochverschluss auf Basis von Schwerfolie in Kombination mit einem auf die Oberseite aufgebrachten Film sind aus der EP 3 036 100 A1 bekannt. Dort ist ein Stanzling insbesondere zum dauerhaften Verschließen von Löchern insbesondere in Blechen oder in Kunststoffteilen offenbart mit einem Träger aus einem Laminat aus mindestens zwei Kunststofffolien, wobei die untere Folie ein Flächengewicht von mindestens 1,5 kg/m$^2$, insbesondere zwischen 1,5 und 6 kg/m$^2$ aufweist und auf der der oberen Folie gegenüberliegenden Seite der unteren Folie eine Klebemasse, insbesondere aushärtbare oder selbstklebende Klebemasse aufgebracht ist. Die obere Folie besteht vorzugsweise aus Polyester, weiter vorzugsweise aus Polyethylenterephthalat (PET).

Neben den klassischen Fahrzeugen mit Verbrennungsmotoren gewinnen Hybridelektrokraftfahrzeuge (englisch Hybrid Electric Vehicle, HEV) und Elektroautos mit Batterie (Battery Electric Vehicle, BEV) zunehmend an Bedeutung.

Ein Hybridelektrokraftfahrzeug ist ein Fahrzeug mit Hybridantrieb, also ein Elektrofahrzeug, das von mindestens einem Elektromotor sowie einem weiteren Energiewandler angetrieben wird und Energie sowohl aus seinem elektrischen Speicher (Akku) als auch einem zusätzlich mitgeführten Kraftstoff bezieht. Ein vollelektrisches Fahrzeug wird ausschließlich von einem batteriebetriebenen Elektromotor angetrieben und benötigt daher keinen fossilen Kraftstoff. Der Akku wird über externe Netzteile geladen.

Problematisch sind bei diesen Fahrzeugen die in der Karosserie befindlichen Akkus wie Lithium-Ionen-Akkus. Ein brennender Lithium-Ionen-Akku ist deutlich schwerer zu löschen als ein brennendes Benzin- oder Dieselfahrzeug.

Daher nehmen auch die Sicherheitsanforderungen für Batterien in E-Autos ständig zu. Die OEMs versuchen mit größtmöglicher Absicherung auf die Anforderungen zu reagieren, indem die Brandausbreitung aus dem Batteriefach in das Fahrzeug durch zum Beispiel die Löcher in der Karosserie verhindert wird. Da die Anforderungen an die Flammentemperaturen und auch an die Dauer bis zum Durchbruch nicht exakt festgelegt sind, wird vorwiegend auf Lösungen zurückgegriffen, die höchstmögliche Temperaturbereiche und Zeitspannen abdecken.

Erste Produkte sind verfügbar, die die gestellten hohen Anforderungen zu erfüllen vermögen. tesa® 54332 von der Firma tesa SE vereint einen extrem hitzebeständigen Träger aus Aluminium und Glasfasergewebe mit einer extra dicken Acrylatklebemasse. Das Produkt ist optimiert für Anwendungen im Automobilbau, um ungenutzte Karosserieöffnungen zu verschließen, bei denen eine exzellente Hitzebeständigkeit sowie perfekte Abdichtung gefordert sind. Dieses Produkt besteht einen horizontalen Brandtest bei Temperaturen bis 500 °C für mindestens 5 min. Bei dem Test wird die Zeit bis zum Durchbruch der Flamme bei jeweiliger Temperatur bestimmt. Der Aufbau und die Durchführung des Brandtests sind weiter unten genau beschrieben.

In der GTR 20 (Global Technical Regulation No. 20) in der Fassung vom 3. Mai 2018 ist niedergelegt, welche Anforderungen aktuell bei BEVs beispielsweise bezüglich des Brandschutzes an die Batteriepakete gestellt werden. Die OEMs/OESs versuchen, auch umliegende Bauteile (zum Beispiel Stanzteile am Unterboden) möglichst feuerfest auszustatten.

Aufgabe der Erfindung ist es, einen Stanzling zur Verfügung zu stellen, der zum dauerhaften Verschließen von Löchern insbesondere in Blechen oder in Kunststoffteilen von Automobilkarosserien geeignet ist, der besagte Löcher derart verschließt, dass ein Durchtritt von Feuchtigkeit ausgeschlossen ist, der mit zumindest einigen der üblichen Lacken

überlackierbar ist, der die Geräuschdämmung verbessert und der bei mechanischen Beanspruchungen im Innenraum, insbesondere im Bodenbereich, sicher verschließt und der eine Verbesserung der Widerstandsfähigkeit gegen Hitze und Feuer bietet.

Gelöst wird diese Aufgabe durch einen Stanzling, wie er im Hauptanspruch niedergelegt ist.

Gegenstand der Unteransprüche sind vorteilhafte Weiterentwicklungen des Erfindungsgegenstandes.

Demgemäß betrifft die Erfindung einen Stanzling insbesondere zum dauerhaften Verschließen von Löchern insbesondere in Blechen oder in Kunststoffteilen mit einem Träger aus einem Laminat in der angegebenen Schichtreihenfolge aus mindestens einer ersten Schicht (auch als Schicht A bezeichnet), die von einem Nadelvlies mit einer Dicke von 1 bis 6 mm gebildet wird, wobei das Nadelvlies mechanisch vernadelte, oxidierte und thermisch stabilisierte Polyacrylnitril-(PAN)-Fasern enthält, optional mindestens einer zweiten Schicht, die von einer Haftklebemasse in Form eines Kaschierklebers insbesondere mit einem Flächenauftragsgewicht von 5 bis 50 g/m$^2$ gebildet wird, mindestens einer dritten Schicht (auch als Schicht B bezeichnet), die von einem Glasgewebe oder Glasgelege mit einem Flächengewicht von 30 bis 200 g/m$^2$ gebildet wird, optional mindestens einer vierten Schicht, die von einer Haftklebemasse in Form eines Kaschierklebers insbesondere mit einem Flächenauftragsgewicht von 5 bis 50 g/m$^2$ gebildet wird, mindestens einer fünften Schicht (auch als Schicht C bezeichnet), die von einer metallischen Schicht mit einer Dicke von 5 bis 40 $\mu$m gebildet wird, und mindestens einer sechsten Schicht (auch als Schicht D bezeichnet), die von einer gegebenenfalls weiteren Haftklebemasse mit einem Flächengewicht von 300 bis 1800 g/m$^2$, vorzugsweise 360 bis 1500 g/m$^2$ und/oder einer Dicke von 400 bis 1800 $\mu$m, vorzugsweise 800 bis 1500 $\mu$m gebildet wird. Die Haftklebemasse der sechsten Schicht ist acrylatbasiert.

Der Stanzling weist also zumindest die erste, dritte, fünfte und sechste Schicht auf. Bevorzugt ist die Ausführungsform des Stanzlings, in der zumindest die erste, zweite, dritte, vierte, fünfte und sechste Schicht gleichzeitig vorhanden sind.

Die erste Schicht, die eine Dicke von mindestens 1 mm bis 6 mm, weiter vorzugsweise 2 mm bis 4 mm, weiter vorzugsweise 3 mm aufweist, wird von einem Nadelvlies gebildet, wobei das Nadelvlies mechanisch vernadelte, oxidierte und thermisch stabilisierte Polyacrylnitril-(PAN)-Fasern (Preox-Fasern) enthält.

Weiter vorzugsweise hat das Nadelvlies ein Flächengewicht von 600 bis 1200 g/m$^2$, weiter vorzugsweise von 700 bis 100 g/m$^2$, weiter vorzugsweise von 800 bis 900 g/m$^2$,

Beim Nadelvlies wird ein Faserflor zu einem Flächengebilde mit Hilfe von mit Widerhaken versehenen Nadeln erzeugt. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Erläuterungen zu Nadelvliesen findet sich unter anderem im Buch "Vliesstoffe - Rohstoffe, Herstellung, Anwendung, Eigenschaften, Prüfung", Hilmar Fuchs, Wilhelm Albrecht (Hrsg.), 2. Auflage, Wiley-VCH Verlag, Weinheim 2012.

Grundbaustein von Polyacrylnitril (PAN) ist Acrylnitril (AN). PAN ist ein teilkristalliner Thermoplast, dessen kristalline Ordnung durch die periodische Anordnung der Kettenmoleküle entsteht und somit von der Prozessierung des Materials abhängt. In homopolymerer Form liegt der Schmelzpunkt von PAN oberhalb der Zersetzungstemperatur, weshalb PAN unter normalen Bedingungen nicht schmelzen kann. Es können bei der Polymerisation des Acrylnitrils Comonomere in das Polymer eingebaut, welche die Prozessierbarkeit der Fasern und somit auch die Eigenschaften der finalen Faser maßgeblich mitbestimmen. Bei der Herstellung können Comonomere die Beweglichkeit der PAN-Ketten erhöhen und damit deren Ausrichtung unterstützen, was zu einer höheren Faserqualität führt. In den folgenden, thermischen Prozessschritten wird durch Art und Menge der Comonomere bestimmt, bei welchen Temperaturen Reaktionen starten, wieviel exotherme Enthalpie dabei frei wird und welche Massenausbeute erzielt wird. Gewöhnlicherweise beträgt der Anteil an Comonomeren nicht mehr als 5 mol%, der restliche Anteil ist AN. Häufig verwendete Comonomere sind Methacrylsäuremethylester (Methylmethacrylat, MMA) und Itaconsäure (IA).

Um das PAN in Faserform zu bringen, wird dieses zunächst gesponnen. Ein konventionelles Schmelzspinnverfahren, bei welchem die Schmelze durch Spinndüsen gepresst wird, kann nur mit hohem Einsatz von Lösungsmitteln und Weichmachern angewendet werden. Auf diese Weise kann der Schmelzpunkt hinreichend reduziert werden, sodass das PAN vor dem Einsetzen von Zyklisierungsreaktionen schmilzt. Weitaus praktikabler und daher am häufigsten eingesetzt ist ein Nassspinnverfahren. Bei diesem wird eine PAN-Lösung in ein Fällbad eingedüst, in welchem das Polymer ausfällt. Das Lösungsmittel diffundiert aus der Polymerlösung in das Koagulationsbad. Die Kinetik dieser Vorgänge ist hauptsächlich von der Temperatur des Bades sowie von den Konzentrationsgradienten abhängig.

Gemäß einer bevorzugten Ausführungsform der Erfindung enthält das Nadelvlies bis zu 80 Gew.-% Polyacrylnitril-(PAN)-Fasern, weiter vorzugsweise bis zu 90 Gew.-%, weiter vorzugsweise bis zu 95 Gew.-%.

Gemäß einer besonders bevorzugten Ausführungsform der Erfindung besteht das Nadelvlies aus Polyacrylnitril-(PAN)-Fasern (100 Gew.-%).

Die andere Fasern können aus Glas, Kohlenstoff (Carbon), Kombinationen aus beiden Fasertypen, Aramidfasern oder Polyamid, aus verstreckten Polymerfasern wie Polyesterfasern wie Polyethylenterephthalat, Polypropylenfasern, Polyethylenfasern bestehen.

Die Fasern haben vorzugsweise eine Faserstärke von 2 bis 5 denier und/oder eine Faserlänge von 30 bis 90 mm.

Erfindungsgemäß kann das Nadelvlies ein Flammschutzmittel enthalten, vorzugsweise mit einem Gehalt von mindestens 1 Gew.-% Flammschutzmittel und vorzugsweise weniger als 10 Gew.-% Flammschutzmittel. Es hat sich herausgestellt, dass bei derartigen Gehalten an Flammschutzmittel die Eigenschaften der Schicht gar nicht beziehungsweise kaum beeinträchtigt werden. Erfindungsgemäß werden Anteile an Flammschutzmittel in der Schicht desto mehr bevorzugt, je niedriger sie sind. Bevorzugt enthält die Schicht weniger als 8 Gew.-%, besonders bevorzugt weniger als 6 Gew.-%, insbesondere weniger als 3 Gew.-%. Die Angaben sind jeweils bezogen auf das Gesamtgewicht der Schicht.

Einsetzbare Flammschutzmittel umfassen beispielsweise Aluminiumoxidhydrate, Zinkborate, Ammoniumphosphate beziehungsweise Ammoniumpolyphosphate, Antimonoxid, Chlorparaffine, polychlorierte Biphenyle, Hexabrombenzol, polybromierte Diphenylether; Cyanurate wie Melamincyanurat; organische Phosphorsäurederivate, beispielsweise 2-Carboxyethylphenylphosphorsäure; organische Phosphate und Polyphosphate, Phosphite und Phosphonate, beispielsweise Tritolylphosphat, tert-Butylphenyldiphenylphosphat, Bisphenol A-bis(diphenylphosphat), Resorcinolbis(diphenylphosphat) und Melaminpolyphosphat, Diethylbis(2-hydroxyethyl)aminomethylphosphonat und Diphenylanilinophosphonat, Phosphinsäuresalze, Diphosphinsäuresalze und Dialkylphosphinsäuresalze; sowie halogenierte organische Phosphorverbindungen wie Tris(2,3-dibrompropyl)phosphat, Tris(2-brom-4-methylphenyl)phosphat und Tris(2-chlorisopropyl)phosphat. Halogenfreie Flammschutzmittel werden erfindungsgemäß bevorzugt. Die erfindungsgemäß einsetzbaren Flammschutzmittel sind daher bevorzugt ausgewählt aus der Gruppe bestehend aus Aluminiumoxidhydraten, Zinkboraten, Ammoniumphosphaten und Ammoniumpolyphosphaten, Antimonoxid; Cyanuraten; organischen Phosphorsäurederivaten; organischen Phosphaten, Phosphiten und Phosphonaten; Phosphinsäuresalzen, Diphosphinsäuresalzen und Dialkylphosphinsäuresalzen sowie Gemischen aus zwei oder mehreren der vorstehend aufgeführten Flammschutzmittel. Besonders bevorzugt sind die erfindungsgemäß einsetzbaren Flammschutzmittel ausgewählt aus der Gruppe bestehend aus Ammoniumpolyphosphaten und Dialkylphosphinsäuresalzen.

Erfindungsgemäß bevorzugte Dialkylphosphinsäuresalze sind solche der Formel F2

$$(R^{III}R^{IV}(O)P\text{-}O^{(-)})_mM^{(m+)} \qquad \text{(F2)},$$

worin $R^{III}$ und $R^{IV}$ gleich oder verschieden sind und für einen linearen oder verzweigten $C_1$- bis $C_6$-Alkylrest stehen; M für Mg, Ca, Al, Sb, Sn, Ge, Ti, Fe, Zr, Zn, Ce, Bi, Sr, Mn, Li, Na, K oder eine protonierte Stickstoffbase steht; und m für eine natürliche Zahl von 1 bis 4 steht.

M steht bevorzugt für Al, Ca, Ti, Zn, Sn oder Zr.

$R^{III}$ und $R^{IV}$ sind bevorzugt gleich oder verschieden und stehen für einen Methyl-, Ethyl-, n-Propyl-, iso-Propyl-, n-Butyl-, iso-Butyl-, tert-Butyl-, n-Pentyl-, iso-Pentyl-, n-Hexyl- oder iso-Hexylrest.

Besonders bevorzugte Dialkylphosphinsäuresalze sind Aluminiumtrisdiethylphosphinat, Aluminiumtrismethylethylphosphinat, Aluminiumtrisethylbutylphosphinat, Titanylbisdiethylphosphinat, Titantetrakisdiethylphosphinat, Titanylbismethylethylphosphinat, Titantetrakismethylethylphosphinat, Titanylbisethylbutylphosphinat, Titantetrakisethylbutylphosphinat, Zinkbisdiethylphosphinat, Zinkbismethylethylphosphinat und Zinkbisethylbutylphosphinat sowie Mischungen aus einem oder mehreren dieser Dialkylphosphinsäuresalze.

Das Flammschutzmittel kann neben den schon erwähnten Substanzen erfindungsgemäß einen oder mehrere so genannte(n) Synergisten umfassen. Synergisten können zu 0,1 bis 70 Gew.-%, bezogen auf das Gesamtgewicht des Flammschutzmittels, im Flammschutzmittel enthalten sein. Besonders bevorzugt enthält das Flammschutzmittel

a) 60 bis 99 Gew.-% einer oder mehrerer Verbindungen ausgewählt aus Dialkylphosphinsäuresalzen der Formel F2 und Ammoniumpolyphosphaten und
b) 1 bis 40 Gew.-% eines oder mehrerer Synergisten,

wobei die Anteile auf das Gesamtgewicht des Flammschutzmittels bezogen sind und sich zu 100 Gew.-% addieren.

Die Synergisten sind bevorzugt Stickstoff-, Phosphor- oder Phosphorstickstoffverbindungen. Besonders bevorzugt ist der Synergist beziehungsweise sind die Synergisten ausgewählt aus der Gruppe bestehend aus Allantoin, Cyanursäure, Glycoluril, Harnstoff, Melamin, Melam, Melem, Melon, Melaminphosphat, Melaminpyrophosphat, Melaminpolyphosphat, Melampolyphosphat, Melempolyphosphat, Melonpolyphosphat, Melamincyanurat, Piperazinphosphat, Piperazinpyrophosphat, Carbodiimid, sterisch gehinderten Phenolen, Phosphinoxid, Hypophosphit, cyclischen Phosphonaten, Triaryl(alkyl)phosphiten, alkyl- und arylsubstituierten Phosphaten, Aluminium-, Zinn-, Bor-, Magnesium-, Calcium-, Cerverbindungen, Zinkoxid, Zinkcarbonat, Zinkstannat, Zinkborat, Zinkhydrogenphosphat, Zinkpyrophosphat, Zinkoleat, Zinkstearat und/oder Zinkphosphat.

Sofern das Flammschutzmittel einen oder mehrere Synergisten enthält, werden diese erfindungsgemäß als

Bestandteil des Flammschutzmittels angesehen. Sie sind also - wenn vorhanden - insbesondere auch in die in vorangegangenen Abschnitten erwähnten Anteile des Flammschutzmittels inkludiert.

Das Flammschutzmittel kann mit üblichen Mischgeräten, beispielsweise mit Rührwerken, in die Zusammensetzungen der Schicht eingearbeitet werden. Die Einarbeitung erfolgt bevorzugt vor dem Ausbringen der betreffenden Schicht.

Des Weiteren können Silikon basierte Additive zugesetzt sein, die die Wirkung der Flammschutzmittel unterstützen. Derartige Additive sind beispielsweise in der US 4,387,176 A beschrieben.

Das Glasgewebe oder -gelege der dritten Schicht weist vorteilhaft folgende Eigenschaften auf: Das Flächengewicht liegt zwischen 60 und 120 g/m$^2$, insbesondere zwischen 70 und 100 g/m$^2$, weiter insbesondere zwischen 80 und 90 g/m$^2$.

Die Fadenzahl in der Kette und/oder die Fadenzahl im Schuss beträgt jeweils 3 bis 50 Fäden/cm. Gemäß einer weiteren vorteilhaften Ausführungsform der Erfindung beträgt die Fadenzahl in der Kette 5 bis 10/cm, vorzugsweise 7/cm und/oder die Fadenzahl im Schuss 4 bis 10/cm, vorzugsweise 5/cm.

Das Fadengewicht der Längs- und Querfäden liegt vorzugsweise zwischen 500 und 1000 dtex, weiter vorzugsweise zwischen 600 und 800 dtex, besonders vorzugsweise bei 680 dtex.

Als Quertiter bezeichnet man die Anzahl der Querfäden (Schussfäden) pro Zentimeter multipliziert mit dem Fadengewicht der Querfäden in dtex. Die Einheit ist dtex/cm.

Als Längstiter bezeichnet man die Anzahl der Längsfäden (Kettfäden) pro Zentimeter multipliziert mit dem Fadengewicht der Längsfäden in dtex. Die Einheit ist ebenfalls dtex/cm.

Gemäß einer weiteren vorteilhaften Ausführungsform der Erfindung ist der Längstiter der Längsfäden und/oder der Quertiter der Querfäden größer 2000 dtex/cm. Vorzugsweise liegt der Längstiter zwischen 4000 und 5000 dtex/cm und/oder der Quertiter zwischen 3000 und 4000 dtex/cm.

Bei einem Glasgewebe sind die Fäden in Leinwandbindung verwebt. Andere Bindungsarten sind die Atlasbindung (auch als Satin bekannt, das es in regelmäßiger und unregelmäßiger Form gibt) und die Köperbindung. Gewebe in Köperbindung (zum Beispiel ein "2 über 1 Köper") erzeugen einen so genannten Köpergrat, der diagonal zur Maschinenrichtung verläuft.

Ein Gelege ist ein Flächengebilde, das aus einer oder mehreren Lagen von parallel verlaufenden, gestreckten Fäden besteht. An den Kreuzungspunkten werden die Fäden üblicherweise fixiert. Die Fixierung erfolgt entweder durch Stoffschluss oder mechanisch durch Reibung und/oder Formschluss.

Es existieren folgende Arten von Fadengelegen:

- monoaxiale oder unidirektionale, die durch das Fixieren einer Schar von parallelen Fäden entstehen
- biaxiale, bei denen zwei Scharen von parallelen Fäden in Richtung von zwei Achsen fixiert werden
- multiaxial: mehrere Scharen aus parallelen Fäden werden in Richtung verschiedener Achsen fixiert.

Die Fadenlagen bei mehrlagigen Gelegen können alle unterschiedliche Orientierungen aufweisen, auch aus unterschiedlichen Fadendichten und unterschiedlichen Fadenfeinheiten bestehen. Erfindungsgemäß bevorzugt werden einlagige Gelege.

Gemäß einer vorteilhaften Ausführungsform der Erfindung weist die metallische Schicht eine Dicke von 8 bis 20 $\mu$m, weiter vorzugsweise 10 bis 12 $\mu$m, auf. Gegebenenfalls weist diese darüber hinaus eine Prägung auf.

Als Metalle können gewählt werden Silber, Kupfer, Gold, Platin, Aluminium und Aluminiumverbindungen, Zinn, Nichrom, NIROSTA, Titan, Metalloxide wie Cadmiumoxide, Zinnoxide, Zinkoxide, Magnesiumoxide. Besonders bevorzugt wird Aluminium gewählt. Diese Aufzählung ist dabei als nicht abschließend zu betrachten, sondern der Fachmann kann weitere hier nicht explizit genannte Metallschichten wählen, ohne den Erfindungsgedanken zu verlassen.

Bevorzugt handelt es sich um eine gewalzte Metall-, insbesondere Aluminiumfolie.

In weiter vorteilhafter Weise können erfindungsgemäß als metallische Schicht Schichten aus Metalloxid (MeOx-Schichten) verwendet werden. Vorteilhafte Metalloxidschichten bestehen beispielsweise aus Siliziumdioxid ($SiO_2$), Titandioxid ($TiO_2$) oder Zink-Zinn-Oxid (ZnSnO), oder sie umfassen eines oder mehrerer dieser Metalloxide

Zwischen der ersten Schicht aus dem Nadelvlies und der dritten Schicht in Form eines Glasgewebes oder -geleges sowie zwischen der dritten Schicht in Form eines Glasgewebes oder -geleges und der metallischen Schicht können Funktionsschichten wie etwa Haftvermittler zur Verbesserung der Verbundhaftung vorhanden sein. Bevorzugt wird eine Haftklebemassenschicht in Form eines Kaschierklebers verwendet, und zwar mit einem Flächenauftragsgewicht von 5 bis 50 g/m$^2$, insbesondere von 7 bis 20 g/m$^2$.

Es besteht aber auch die Möglichkeit, die erste Schicht aus Nadelvlies und die dritte Schicht in Form eines Glasgewebes oder -geleges sowie die dritte Schicht in Form eines Glasgewebes oder - geleges und die metallische Schicht durch Lamination unter Druck zusammenzufügen.

Weiter vorzugsweise befindet sich das Glasgewebe oder -gelege in einer Polymerschicht, beispielsweise auf Basis von Polyurethan, und zwar derart, dass alle Filamente des Glasgewebes oder -geleges möglichst vollständig von dem Polymer umschlossen sind.

Vorzugsweise wird dazu das Glasgewebe oder -gelege in das noch viskose Polymer eingebracht, so dass das Polymer das Glasgewebe oder -gelege umfließt, oder das Polymer wird über das Glasgewebe oder -gelege gegossen, so dass das Polymer um das Glasgewebe oder -gelege fließt.

Als Kaschierkleber geeignet sind insbesondere Haftklebemassen, wie sie im Folgenden ausführlich erläutert werden.

Es kann auf alle bekannten Klebemassensysteme zurückgegriffen werden. Neben Natur- oder Synthesekautschuk basierten Klebemassen sind insbesondere Silikonklebemassen sowie Polyacrylatklebemassen verwendbar.

Die beiden Klebemasseschichten können identisch ausgeführt sein, sie könne dem Bedarf angepasst unterschiedlich gewählt werden.

Auch das jeweilige Auftragsgewicht kann unterschiedlich oder identisch sein.

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Dabei kann auf alle bekannten Klebemassensysteme zurückgegriffen werden. Neben Natur- oder Synthesekautschuk basierten Klebemassen sind insbesondere Silikonklebemassen sowie Polyacrylatklebemassen, vorzugsweise eine niedermolekulare Acrylatschmelzhaftklebemasse, verwendbar.

Bevorzugt werden Klebemassen, die auf Acrylat oder Silikon basieren.

Die Klebemasse kann aus der Gruppe der Naturkautschuke oder der Synthesekautschuke oder aus einem beliebigen Blend aus Naturkautschuken und/oder Synthesekautschuken gewählt werden, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Ebenfalls bevorzugt besteht die Klebebeschichtung aus einer Klebmasse auf Basis Synthesekautschuk, nämlich insbesondere eine Klebemasse aus mindestens einem Vinylaromaten-Block-Copolymer und zumindest einem Klebharz. Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen

Blockcopolymere bis zur Hälfte ersetzen können.

Als Klebrigmacher dienen Klebharze, die mit dem Elastomerblock der Styrolblockcopolymere verträglich sind.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Als weitere Additive können allen genannten Typen von Klebemassen Lichtschutzmittel wie zum Beispiel UV-Absorber, sterisch gehinderte Amine, Antiozonantien, Metalldesaktivatoren, Verarbeitungshilfsmittel, endblockverstärkende Harze zugesetzt werden.

Füllstoffe wie zum Beispiel Siliziumdioxid, Glas (gemahlen oder in Form von Kugeln als Voll- oder Hohlkugeln), Mikroballons, Aluminiumoxide, Zinkoxide, Calciumcarbonate, Titandioxide, Ruße, Silikate und Kreide, um nur einige zu nennen, ebenso Farbpigmente und Farbstoffe sowie optische Aufheller können ebenfalls Verwendung finden.

Üblicherweise werden Haftklebemassen primäre und sekundäre Antioxidantien zugesetzt, um ihre Alterungsstabilität zu verbessern. Primäre Antioxidantien reagieren dabei mit Oxi- und Peroxiradikalen, die sich in Gegenwart von Sauerstoff bilden können, und reagieren mit diesen zu weniger reaktiven Verbindungen. Sekundäre Antioxidantien reduzieren zum Beispiel Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.

Stellvertretend genannt seien an dieser Stelle vor allem die besonders verträglichen Styrol-Isopren-Styrol (SIS)- und Styrol-Butadien-Styrol (SBS)-Typen. Geeignete Elastomere zum Abmischen sind auch zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Daneben hat sich ein 100%-System auf Styrol-Isopren-Styrol (SIS) als geeignet erwiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.

Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.

Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.

Die thermische Anregung der Vernetzer kann auch durch IR-Strahlen oder hochenergetische Wechselfelder erfolgen.

Verwendbar sind Klebemassen auf Lösemittelbasis, auf wässriger Basis oder auch als Hotmeltsystem. Auch eine Masse auf Acrylathotmelt-Basis ist geeignet, wobei diese einen K-Wert von mindestens 20 aufweisen kann, insbesondere größer 30, erhältlich durch Aufkonzentrieren einer Lösung einer solchen Masse zu einem als Hotmelt verarbeitbaren System Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der DE 43 13 008 A1 dargelegt, auf deren Inhalt hiermit Bezug genommen wird und deren Inhalt Teil dieser Offenbarung und Erfindung wird.

Die Klebemasse auf Acrylathotmelt-Basis kann aber auch chemisch vernetzt sein.

Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.

Die Lösung der Masse kann 5 bis 80 Gew.-%, insbesondere 30 bis 70 Gew.-% Lösungsmittel enthalten. Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.

Die Klebemasse auf Acrylathotmelt-Basis kann UV-vernetzt werden. Andere Vernetzungsarten sind aber auch

möglich, zum Beispiel die Elektronenstrahlenvernetzung.

In einer weiteren bevorzugten Ausführungsform werden als Selbstklebemassen Copolymerisate aus (Meth)-acrylsäure und deren Estern mit 1 bis 25 C-Atomen, Malein-, Fumar- und/oder Itaconsäure und/oder deren Estern, substi¬tuierten (Meth)acrylamiden, Maleinsäureanhydrid und anderen Vinylverbindungen, wie Vinylestern, insbesondere Vinyl¬acetat, Vinylalkoholen und/oder Vinylethern eingesetzt.

Eine Klebemasse, die sich ebenfalls als geeignet zeigt, ist eine niedermolekulare Acrylatschmelzhaftklebemasse, wie sie unter der Bezeichnung acResin UV oder Acronal®, insbesondere Acronal® DS 3458 oder AC Resin A 260UV, von der BASF geführt wird. Diese Klebemasse mit niedrigem K-Wert erhält ihre anwendungsgerechten Eigenschaften durch eine abschließende strahlenchemisch ausgelöste Vernetzung.

Weitere hervorragend geeignete Klebemassen werden in der EP 2 520 627 A1, der EP 2 522 705 A1, der EP 2 520 628 A1, der EP 2 695 926 A1 und der EP 2 520 629 A1 beschrieben.

Besonders bevorzugt ist eine Haftklebemasse in Form einer getrockneten Polymerdispersion, wobei das Polymer aufgebaut ist aus:

(a) 95,0 bis 100,0 Gew.-% n-Butylacrylat und/oder 2-Ethylhexylacrylat
(b) 0,0 bis 5,0 Gew.-% eines ethylenisch ungesättigten Monomers mit einer Säure- oder Säureanhydridfunktion

Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 97,0 oder 98,0 Gew.-% bis 99,0 Gew.-% n-Butylacrylat und/oder 2-Ethylhexylacrylat und 1,0 bis 2,0 Gew.-% oder 3 Gew.-% eines ethylenisch ungesättigten Monomers mit einer Säure- oder Säureanhydridfunktion.

Neben den aufgeführten Acrylatpolymeren können der Haftklebemasse neben gegebenenfalls vorhandenen Restmonomeren zusätzlich Klebrigmacher und/oder Zuschlagstoffe wie Lichtschutz- oder Alterungsschutzmitteln zugesetzt werden.

Insbesondere sind keine weiteren Polymere wie Elastomere in der Haftklebemasse enthalten, das heißt, das die Polymere der Haftklebemasse bestehen nur aus den Monomeren (a) und (b) in den angegebenen Mengenverhältnissen.

Bevorzugt bildet n-Butylacrylat das Monomer (a).

Als Monomer (b) kommen vorteilhaft in Betracht zum Beispiel Acrylsäure, Methacrylsäure, Itaconsäure, Maleinsäure, Fumarsäure und/oder Maleinsäureanhydrid.

Bevorzugt ist (Meth-)acrylsäure der Formel I,

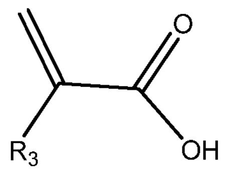

(I)

wobei $R^3$ = H oder $CH_3$ ist, bevorzugt wird gegebenenfalls die Mischung aus Acrylsäure oder Methacrylsäure verwendet. Besonders bevorzugt ist Acrylsäure.

Gemäß einer besonders bevorzugten Variante weist das Polymer die folgende Zusammensetzung auf:

(a) 95,0 bis 100,0 Gew.-%, vorzugsweise 95,0 bis 99,5 Gew.-%, weiter vorzugsweise 98,0 bis 99,0 Gew.-% n-Butylacrylat und
(b) 0,0 bis 5,0 Gew.-%, vorzugsweise 0,5 bis 5,0 Gew.-%, weiter vorzugsweise 1,0 bis 2,0 Gew.-% Acrylsäure

Die Polymerdispersion wird hergestellt durch das Verfahren der Emulsionspolymerisation der genannten Komponenten. Beschreibungen dieses Verfahrens sind zum Beispiel zu finden in "Emulsion Polymerization and Emulsion Polymers" von Peter A. Lovell and Mohamed S. El-Aasser - Wiley-VCH 1997 - ISBN 0-471-96746-7 oder in EP 1 378 527 B1.

Bei der Polymerisation ist es nicht auszuschließen, dass nicht alle Monomere zu Polymeren umgesetzt werden. Dabei ist es naheliegend, dass der Restmonomergehalt möglichst klein sein soll.

Bevorzugt werden Klebemassen umfassend die Polymerdispersion mit einem Restmonomerengehalt von kleiner gleich 1 Gew.-%, insbesondere kleiner gleich 0,5 Gew.-% (bezogen auf die Masse der getrockneten Polymerdispersion) bereitgestellt.

Abschließend sei erwähnt, dass auch auf Polyurethan basierende Kleber geeignet sind.

Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-,

Alterungsschutz-, Vernetzungsmitteln, Vernetzungspromotoren oder Elastomeren abgemischt sein.

Als Klebrigmacher finden die bereits ausführlich beschriebenen Harze Verwendung.

Geeignete Füllstoffe und Pigmente sind beispielsweise Ruß, Titandioxid, Calciumcarbonat, Zinkcarbonat, Zinkoxid, Silicate oder Kieselsäure.

Geeignete Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Vernetzungsmittel sind beispielsweise Phenolharze oder halogenierte Phenolharze, Melamin- und Formaldehydharze. Geeignete Vernetzungspromotoren sind zum Beispiel Maleinimide, Allylester wie Triallylcyanurat, mehrfunktionelle Ester der Acryl- und Methacrylsäure.

Unter einem "Klebharz" wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden, ansonsten aber identischen Haftklebemasse erhöht.

Der Einsatz von Klebrigmachern zur Steigerung der Klebkräfte von Haftklebemassen ist grundsätzlich bekannt. Dieser Effekt stellt sich auch ein, wenn der Klebmasse bis zu 15 Gewichtsteile (entspricht < 15 Gewichtsteile), beziehungsweise 5 bis 15 Gewichtsteile Klebrigmacher (bezogen auf die Masse der getrockneten Polymerdispersion) hinzugefügt werden. Bevorzugt werden 5 bis 12, weiter bevorzugt 6 bis 10 Gewichtsteile Klebrigmacher (bezogen auf die Masse der getrockneten Polymerdispersion) hinzugefügt.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter $C_5$- oder $C_9$-Monomere), Terpenphenolharze, Polyterpenharze auf Basis von Rohstoffen wie zum Beispiel $\alpha$- oder $\beta$-Pinen, aromatische Harze wie Cumaron-Inden-Harze oder Harze auf Basis Styrol oder $\alpha$-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze.

Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen.

Besonders bevorzugt ist die Variante, bei der der Haftklebemasse keinerlei Klebharze zugesetzt sind.

Insbesondere nicht zugesetzt werden der Haftklebemasse die folgenden Substanzen:

- Kohlenwasserstoffharze (zum Beispiel Polymere auf Basis ungesättigter $C_5$- oder $C_9$-Monomere)
- Terpenphenolharze
- Polyterpenharze auf Basis von Rohstoffen wie zum Beispiel $\alpha$- oder ß-Pinen
- aromatische Harze wie Cumaron-Inden-Harze oder Harze auf Basis Styrol oder $\alpha$-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit

Unter einem "Poly(meth)acrylat" wird ein Polymer verstanden, dessen Monomerbasis zu mindestens 60 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 50 Gew.-%, bezogen auf die gesamte Monomerbasis des betreffenden Polymers, enthalten sind. Insbesondere wird unter einem "Poly(meth)acrylat" ein Polymerisat verstanden, welches durch radikalische Polymerisation von Acryl- und/oder Methacrylmonomeren sowie gegebenenfalls weiteren, copolymerisierbaren Monomeren erhältlich ist.

Erfindungsgemäß ist das Poly(meth)acrylat beziehungsweise sind Poly(meth)acrylate zu 30 bis 65 Gew.-%, bezogen auf das Gesamtgewicht der Haftklebemasse, enthalten. Bevorzugt enthält die erfindungsgemäße Haftklebemasse 35 bis 55 Gew.-%, bezogen auf das Gesamtgewicht der Haftklebemasse, mindestens eines Poly(meth)acrylats.

Die Glasübergangstemperatur der erfindungsgemäß einsetzbaren Poly(meth)acrylate beträgt bevorzugt < 0 °C, stärker bevorzugt zwischen -20 und -50 °C.

Die Glasübergangstemperatur von Polymeren oder Polymerblöcken in Blockcopolymeren wird im Rahmen dieser Erfindung mittels dynamischer Scanning Kalorimetrie (DSC) bestimmt.

Vorzugsweise sind die Poly(meth)acrylate der erfindungsgemäßen Haftklebemasse erhältlich durch zumindest anteiliges Einpolymerisieren von funktionellen, bevorzugt mit Epoxidgruppen vernetzungsfähigen Monomeren. Besonders bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; insbesondere bevorzugt sind carbonsäuregruppenhaltige Monomere. Es ist ganz besonders vorteilhaft, wenn das Polyacrylat einpolymerisierte Acrylsäure und/oder Methacrylsäure aufweist. All diese Gruppen weisen eine Vernetzungsfähigkeit mit Epoxidgruppen auf, wodurch das Polyacrylat vorteilhaft einer thermischen Vernetzung mit eingebrachten Epoxiden zugänglich wird.

Weitere Monomere, die als Comonomere für die Poly(meth)acrylate verwendet werden können, sind neben Acrylsäure- und/oder Methacrylsäureestern mit bis zu 30 C-Atomen pro Molekül beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und einer oder zwei Doppelbindungen oder Mischungen dieser Monomere.

Die Eigenschaften des betreffenden Poly(meth)acrylats lassen sich insbesondere über eine Variation der Glasübergangstemperatur des Polymers durch unterschiedliche Gewichtsanteile der einzelnen Monomere beeinflussen. Das beziehungsweise die Poly(meth)acrylat(e) der Erfindung können vorzugsweise auf die folgende Monomerzusammensetzung zurückgeführt werden:

a) Acrylsäureester und/oder Methacrylsäureester der folgenden Formel

$$CH_2 = C(R^I)(COOR^{II})$$

wobei $R^I$ = H oder $CH_3$ und $R^{II}$ ein Alkylrest mit 4 bis 14 C-Atomen ist,

b) olefinisch ungesättigte Monomere mit funktionellen Gruppen der für eine Reaktivität mit Epoxidgruppen bereits definierten Art,

c) optional weitere Acrylate und/oder Methacrylate und/oder olefinisch ungesättigte Monomere, die mit der Komponente (a) copolymerisierbar sind.

Die Anteile der entsprechenden Komponenten (a), (b), und (c) werden bevorzugt derart gewählt, dass das Polymerisationsprodukt eine Glasübergangstemperatur von < 0 °C, stärker bevorzugt zwischen -20 und -50 °C (DSC) aufweist. Es ist besonders vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc.).

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat und deren verzweigte Isomere, wie zum Beispiel Isobutylacrylat, Isooctylacrylat, Isooctylmethacrylat, 2-Ethylhexylacrylat oder 2-Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine.

Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, insbesondere 2-Hydroxyethylacrylat, Hydroxypropylacrylat, insbesondere 3-Hydroxypropylacrylat, Hydroxybutylacrylat, insbesondere 4-Hydroxybutylacrylat, Hydroxyhexylacrylat, insbesondere 6-Hydroxyhexylacrylat, Hydroxyethylmethacrylat, insbesondere 2-Hydroxyethylmethacrylat, Hydroxypropylmethacrylat, insbesondere 3-Hydroxypropylmethacrylat, Hydroxybutylmethacrylat, insbesondere 4-Hydroxybutylmethacrylat, Hydroxyhexylmethacrylat, insbesondere 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

Beispielhafte Monomere der Komponente (c) sind:

Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkylsubstituierte Amide, wie beispielsweise N,N-Dimethylacrylamid, *N,N*-Dimethylmethacrylamid, N-Benzylacrylamide, N-Isopropylacrylamid, N-tert-Butylacrylamid, *N-tert*-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol, Makromonomere wie 2-Polystyrolethylmethacrylat (gewichtsmittleres Molekulargewicht Mw, bestimmt mittels GPC, von 4000 bis 13000 g/mol), Poly(methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Die Herstellung der Polyacrylate ("Polyacrylate" wird im Rahmen der Erfindung als synonym mit "Poly(meth) acrylate" verstanden) kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln mit einem Siedebereich von 50 bis 150 °C, bevorzugt von 60 bis 120 °C unter Verwendung der üblichen Mengen an Polymerisationsinitiatoren, die im allgemeinen bei 0,01 bis 5, insbesondere bei 0,1 bis 2 Gew.-%, bezogen auf das Gesamtgewicht der Monomeren, liegen, hergestellt.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat, Benzpinacol. In einer sehr bevorzugten Vorgehensweise wird als radikalischer Initiator 2,2'-Azobis(2-methylbutyronitril) (Vazo® 67™ der Firma DuPont) oder 2,2'-Azobis(2-methylpropionitril) (2,2'-Azobisisobutyronitril; AIBN; Vazo® 64™ der Firma DuPont) verwendet.

Als Lösungsmittel für die Herstellung der Poly(meth)acrylate kommen Alkohole wie Methanol, Ethanol, n- und iso-Propanol, n- und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Bevorzugt erfolgt nach der Herstellung (Polymerisation) der Polyacrylate eine Aufkonzentration, und die weitere Verarbeitung der Polyacrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die gewichtsmittleren Molekulargewichte $M_W$ der Polyacrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Die Angaben des mittleren Molekulargewichtes $M_W$ und der Polydispersität PD in dieser Schrift beziehen sich auf die Bestimmung per Gelpermeationschromatographie. Dazu kann es vorteilhaft sein, die Polymerisation in Gegenwart geeigneter Polymerisationsregler wie Thiole, Halogenverbindungen und/oder Alkohole

durchzuführen, um das gewünschte mittlere Molekulargewicht einzustellen.

Die Polyacrylate haben vorzugsweise einen K-Wert von 30 bis 90, besonders bevorzugt von 40 bis 70, gemessen in Toluol (1 %ige Lösung, 21 °C). Der K-Wert nach Fikentscher ist ein Maß für das Molekulargewicht und die Viskosität des Polymerisats.

Erfindungsgemäß besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Polyacrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letzteres besonders gut geeignet ist. Auch über N-Oxyle lassen sich entsprechende Polyacrylate herstellen. Ferner lässt sich in vorteilhafter Weise die Atom Transfer Radical Polymerization (ATRP) zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden.

Die Monomere zur Herstellung der Poly(meth)acrylate enthalten bevorzugt anteilig funktionelle Gruppen, die geeignet sind, mit Epoxidgruppen Verknüpfungsreaktionen einzugehen. Dies ermöglicht vorteilhaft eine thermische Vernetzung der Polyacrylate durch Reaktion mit Epoxiden. Unter Verknüpfungsreaktionen werden insbesondere Additions- und Substitutionsreaktionen verstanden. Bevorzugt kommt es also zu einer Verknüpfung der die funktionellen Gruppen tragenden Bausteine mit Epoxidgruppen tragenden Bausteinen, insbesondere im Sinne einer Vernetzung der die funktionellen Gruppen tragenden Polymerbausteine über Epoxidgruppen tragende Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es bevorzugt insgesamt zu einer mittelbaren Verknüpfung der die funktionellen Gruppen tragenden Bausteine.

Die Poly(meth)acrylate der erfindungsgemäßen Haftklebemasse sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die sowohl eine ausreichend lange Verarbeitungszeit gewährleisten, sodass es nicht zu einer Vergelung während des Verarbeitungsprozesses, insbesondere des Extrusionsprozesses, kommt, als auch zu einer schnellen Nachvernetzung des Polymers auf den gewünschten Vernetzungsgrad bei niedrigeren Temperaturen als der Verarbeitungstemperatur, insbesondere bei Raumtemperatur, führen. Möglich ist beispielsweise eine Kombination aus Carboxyl-, Amin- und/oder Hydroxygruppen enthaltenden Polymeren und Isocyanten, insbesondere aliphatischen oder mit Aminen deaktivierten trimerisierten Isocyanaten, als Vernetzer.

Geeignete Isocyanate sind insbesondere trimerisierte Derivate von MDI [4,4-Methylen-di(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethylcyclohexan], beispielsweise die Typen Desmodur® N3600 und XP2410 (jeweils BAYER AG: Aliphatische Polyisocyanate, niedrigviskose HDI-Trimerisate). Ebenfalls geeignet ist die oberflächendeaktivierte Dispersion von mikronisiertem trimerisiertem IPDI BUEJ 339®, jetzt HF9 ® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyanat, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG).

Bevorzugt werden thermische Vernetzer zu 0,1 bis 5 Gew.-%, insbesondere zu 0,2 bis 1 Gew.-%, bezogen auf die Gesamtmenge des zu vernetzenden Polymers, eingesetzt.

Bevorzugt sind die Poly(meth)acrylate der Haftklebemasse mittels Epoxid(en) beziehungsweise mittels einer oder mehrerer epoxidgruppenhaltigen Substanz(en) vernetzt. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine der Poly(meth)acrylate. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole (insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche), Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanillin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureresten ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.

Sehr geeignete Ether sind beispielsweise 1,4-Butandioldiglycidether, Polyglycerol-3-glycidether, Cyclohexandimethanoldiglycidether, Glycerintriglycidether, Neopentylglykol-diglycidether, 1,6-Hexandioldiglycidether), Polypropylenglykoldiglycidether, Trimethylolpropantriglycidether, Pentaerythrittetraglycidether, Bisphenol-A-diglycidether und Bisphenol-F-diglycidether.

Besonders bevorzugt für die Poly(meth)acrylate als zu vernetzende Polymere ist die Verwendung eines beispielsweise in der EP 1 978 069 A1 beschriebenen Vernetzer-Beschleuniger-Systems ("Vernetzungssystem"), um eine bessere Kontrolle sowohl über die Verarbeitungszeit, Vernetzungskinetik sowie den Vernetzungsgrad zu erhalten. Das Vernetzer-Beschleuniger-System umfasst zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltigen Verbindungen beschleunigend wirkende Substanz als Beschleuniger.

Als Beschleuniger werden erfindungsgemäß besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine, die mit den Bausteinen der zu vernetzenden Polymere keine oder nur geringfügige Reaktionen eingehen.

Prinzipiell können als Beschleuniger sowohl primäre ($NRH_2$), sekundäre ($NR_2H$) als auch tertiäre Amine ($NR_3$) gewählt werden, selbstverständlich auch solche, die mehrere primäre und/oder sekundäre und/oder tertiäre Amingruppen aufweisen. Besonders bevorzugte Beschleuniger sind aber tertiäre Amine wie beispielweise Triethylamin, Triethylendiamin, Benzyldimethylamin, Dimethylamino-methylphenol, 2,4,6-Tris-(N,N-dimethylaminomethyl)-phenol, N,N'-Bis(3-(dimethylamino)propyl)harnstoff. Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin, Trimethylhexamethylendiamin.

Als Beschleuniger werden darüber hinaus bevorzugt Aminoalkohole verwendet. Besonders bevorzugt werden sekundäre und/oder tertiäre Aminoalkohole eingesetzt, wobei im Falle mehrerer Aminfunktionalitäten pro Molekül bevorzugt mindestens eine, bevorzugt alle Aminfunktionalitäten sekundär und/oder tertiär sind. Als bevorzugte Aminoalkohol-Beschleuniger können Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und/oder N,N,N'-Trimethylaminopropylethanolamin eingesetzt werden.

Weitere geeignete Beschleuniger sind Pyridin, Imidazole (wie beispielsweise 2-Methylimidazol) und 1,8-Diazabicyclo[5.4.0]undec-7-en. Auch cycloaliphatische Polyamine können als Beschleuniger eingesetzt werden. Geeignet sind auch Beschleuniger auf Phosphatbasis wie Phosphine und/oder Phosphoniumverbindungen, wie beispielsweise Triphenylphosphin oder Tetraphenylphosphoniumtetraphenylborat.

Acrylathaftklebemassen sind typischerweise radikalisch polymerisierte Copolymere aus Acrylsäurealkylestern oder Methacrylsäurealkylestern von C1- bis C20-Alkoholen wie zum Beispiel Methylacrylat, Ethyl(meth)acrylat, n-Butyl(meth)acrylat, t Butyl(meth)acrylat, Cyclohexyl(meth)acrylat, 2-Ethylhexyl(meth)acrylat, n-Octyl(meth)acrylat, iso Octyl(meth)acrylat, n-Decyl(meth)acrylat, n-Dodecyl(meth)acrylat, Tetradecyl(meth)acrylat, Lauryl(meth)acrylat, Oleyl(meth)acrylat, Palmityl(meth)acrylat und Stearyl(meth)acrylat neben weiteren (Meth)acrylsäureestern wie Isobornyl(meth)acrylat, Benzyl(meth)acrylat, Phenyl(meth)acrylat und 2 Bromoethyl(meth)acrylat, Alkoxyalkyl(meth)acrylate wie Ethoxyethyl(meth)acrylat. Weiterhin fallen darunter Ester von ethylenisch ungesättigten Di- und Tricarbonsäuren und Anhydriden wie Ethylmaleat, Dimethylfumarat und Ethylmethylitaconat. Ebenfalls fallen vinylaromatische Monomere wie zum Beispiel Styrol, Vinyltoluol, Methylstyrol, n Butylstyrol, Decylstyrol darunter.

Weitere mögliche Monomere sind Vinylester aus bis zu 20 Kohlenstoffatomen enthaltenden Carbonsäuren wie Vinylacetat oder Vinyllaurat, Vinylether aus bis zu 10 Kohlenstoffatomen enthaltenden Alkoholen wie Vinylmethylether oder Vinylisobutylether, Vinylhalogenide wie Vinylchlorid oder Vinylidendichlorid, Nitrile wie Acrylnitril oder Methacrylnitril, Säureamide wie Acrylamid oder Methacrylamid und ungesättigte Kohlenwasserstoffe mit 2 bis 8 Kohlenstoffatomen wie Ethylen, Propen, Butadien, Isopren, 1-Hexen oder 1-Octen.

Zur Beeinflussung der physikalischen und optischen Eigenschaften der Haftklebemasse kommen mehrfunktionale ethylenisch ungesättigte Monomere als Vernetzermonomere in Frage. Beispiele hierzu sind Divinylbenzol, Alkyldiacrylate wie 1,2-Ethylenglykoldiacrylat, 1,4-Butandioldiacrylat, 1,6 Hexandioldiacrylat, 1,8-Octandioldiacrylat oder 1,12-Dodecandioldiacrylat, Triacrylate wie Trimethylolpropantriacrylat und Tetraacrylate wie Pentaerythritoltetraacrylat.

Unter die Gruppe der mehrfunktionellen Monomere fallen auch UV-vernetzbare Monomere, wie zum Beispiel mit (Meth) acrylat-funktionalisierte Derivate des Benzophenons oder des Benzoins.

Eine weitere Gruppe von Monomeren sind solche, die ein latentes Vernetzungspotential im Polymer erzeugen und nach dem Eintrocknen der Klebemasse spontan (häufig katalysiert) zu einem Netzwerkaufbau führen. Ein solches Monomer ist zum Beispiel Glycidymethyacrylat, dessen Oxiranring mit Hydroxyl- oder insbesondere Carboxylatfunktionen unter Ringöffnung zu einer kovalenten Bindung führt. Diese Reaktion findet beschleunigt in Gegenwart von Zinkionen oder, besonders in Anwesenheit von Carboxylfunktionen, Aminen statt.

Zur Erzielung haftklebriger Eigenschaften muss die Verarbeitungstemperatur der Klebmasse oberhalb ihrer Glasübergangstemperatur sein, um viskoelastische Eigenschaften zu haben. Weiterhin lassen sich erfindungsgemäße aktivierbare Klebmassen auf Acrylatbasis einsetzen. So bestehen dann die aktivierbaren Klebmassen in einer besonders bevorzugten Auslegung zu einem Basispolymer a) bestehend aus

a1) 40 bis 95 Gew.-% Acrylsäureester und/oder Methacrylsäureester mit der folgenden Formel

$$CH_2 = C(R_1)(COOR_2),$$

wobei $R_1$ = H oder $CH_3$ und $R_2$ = H und/oder Alkylketten mit 1 bis 30 C-Atomen sind.

a2) 5 bis 30 Gew.-% eines copolymerisierbaren Vinylmonomers mit zumindestens einer Carbonsäure und/oder Sulfonsäure- und/oder Phosphonsäuregruppe

a3) 1 bis 10 Gew.-% eines copolymerisierbaren Vinylmonomers mit zumindest einer Epoxygruppe oder einer Säureanhydridfunktion

a4) 0 bis 20 Gew.-% eines copolymerisierbaren Vinylmonomers, welches mit der funktionellen Gruppe zur Kohäsionssteigerung, der Erhöhung der Reaktivität der Vernetzung, oder zur direkten Vernetzung beitragen kann, und

b) 5 bis 50 Gew.-% eines Epoxy-Harzes oder einer Mischung aus mehreren Epoxy-Harzen

Das Polymer a) kann eine aktivierbare Haftklebemasse umfassen, die unter Temperatureinwirkung und optionalen Druck haftklebrig wird und nach der Verklebung und Abkühlen durch die Verfestigung eine hohe Klebkraft aufbaut. Je nach Anwendungstemperatur weisen diese aktivierbaren Haftklebemassen unterschiedliche statische Glasübergangstemperaturen $T_{G,A}$ oder einen Schmelzpunkte $T_{S,A}$ auf.

In einer sehr bevorzugten Auslegung werden für die Monomere a1) Acrylmomonere eingesetzt, die Acryl- und Methacrylsäureester mit Alkylgruppen bestehend aus 4 bis 14 C-Atomen, bevorzugt 4 bis 9 C-Atomen umfassen. Spezifische Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat, und deren verzweigten Isomere wie zum Beispiel 2-Ethylhexylacrylat. Weitere einzusetzende Verbindungsklassen, die ebenfalls in geringen Mengen unter a1) hinzugesetzt werden können sind Methylmethacrylate, Cyclohexylmethacrylate, Isobornylacrylat und Isobornylmethacrylate.

In einer bevorzugten Weise werden als Monomere a2) Itaconsäure, Acrylsäure, Methacrylsäure, Vinylessigsäure, Fumarsäure, Crotonsäure, Aconitsäure, Dimethylacrylsäure, β-Acryloyloxypropionsäure, Trichloracrylsäure, Vinylphosphonsäure, und Vinylsulfonsäure eingesetzt werden.

In einer bevorzugten Weise werden als Monomere a3) Glycidylmethacrylat Maleinsäureanhydrid und Itaconsäureanhydrid eingesetzt.

In einer sehr bevorzugten Auslegung werden für die Monomere a4) Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

In einer weiteren sehr bevorzugten Auslegung für die Monomere a4) Monomere mit folgenden funktionellen Gruppen eingesetzt: Hydroxy-, Säureamid-, Isocyanato- oder Aminogruppen.

Weitere besonders bevorzugte Beispiele für die Komponente a4) sind Hydroxyethylacrylat, Hydroxypropylacrylat, Hydroxyethylmethacrylat, Hydroxypropylmethacrylat, Allylalkohol, Acrylamid, Benzylacrylat, Benzylmethacrylat, Phenylacrylat, Phenylmethacrylat, t-Butylphenylacrylat, t-Butylaphenylmethacrylat, Phenoxyethylacrlylat, Phenoxyethylmethacrylat, 2-Butoxyethylmethacrylat, 2-Butoxyethylacrylat, Dimethylaminoethylmethacrylat, Dimethylaminoethylacrylat, Diethylaminoethylmethacrylat, Diethylaminoethylacrylat, Cyanoethylmethacrylat, Cyanoethylacrylat, 6-Hydroxyhexylmethacrylat, N-tert.-Butylacrylamid, N-Methylolmethacrylamid, N-(Buthoxymethyl)methacrylamid, N-Methylolacrylamid, N-(Ethoxymethyl)acrylamid, N-Isopropylacrylamid, Tetrahydrofurfurylacrlyat, wobei diese Aufzählung nicht abschließend ist.

In einer weiteren bevorzugten Auslegung werden für die Komponente a4) aromatische Vinylverbindungen eingesetzt, wobei bevorzugt die aromatischen Kerne aus $C_4$ bis $C_{18}$ bestehen und auch Heteroatome enthalten können. Besonders bevorzugte Beispiele sind Styrol, 4-Vinylpyridin, N-Vinylphthalimid, Methylstyrol, 3,4-Dimethoxystyrol, 4-Vinylbenzoesäure, wobei diese Aufzählung nicht abschließend ist.

Zur Polymerisation werden die Monomere wiederum dermaßen gewählt, dass die resultierenden Polymere als industriell verwendbare Klebemassen oder Haftklebemassen eingesetzt werden können, insbesondere derart, dass die resultierenden Polymere klebende oder haftklebende Eigenschaften entsprechend des "Handbook of Pressure Sensitive Adhesive Technology" von Donatas Satas (van Nostrand, New York 1989) besitzen. Auch hier kann die Steuerung der gewünschten Glasübergangstemperatur durch die Anwendung der Fox-Gleichung (G1) bei der Zusammenstellung der Monomermischung, welche der Polymerisation zugrunde liegt, erzielt werden. Für Haftklebemassen liegt die statische Glasübergangstemperatur des resultierenden Polymers vorteilhaft unterhalb 15 °C.

Zur Erzielung einer Glasübergangstemperatur $T_{G,A}$ der Polymere von $T_{G,A} \geq 30$ °C für Hitzeaktivierbare Klebemasse werden entsprechend dem vorstehend gesagten die Monomere sehr bevorzugt derart ausgesucht und die mengenmäßige Zusammensetzung der Monomermischung vorteilhaft derart gewählt, dass sich nach der Fox-Gleichung (G1) (vgl. T.G. Fox, Bull. Am. Phys. Soc. 1 (1956) 123) der gewünschte $T_{G,A}$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Klebemassen werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, Seiten 60 bis 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropyl-percarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Firma DuPont) verwendet.

Die mittleren Molekulargewichte $M_n$ der bei der radikalischen Polymerisation entstehenden Haftklebemassen werden sehr bevorzugt derart gewählt, dass sie in einem Bereich von 20.000 bis 2.000.000 g/mol liegen; speziell für die weitere Verwendung als Schmelzhaftkleber werden Haftklebemassen mit mittleren Molekulargewichten $M_n$ von 100.000 bis 500.000 g/mol hergestellt.

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten.

Die Polymerisationszeit beträgt - je nach Umsatz und Temperatur - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Ist eine Schwerentflammbarkeit erwünscht, lässt sich diese erzielen, indem der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden. Eine ausführliche Beschreibung geeigneter Flammschutzmittel findet sich später.

Zur Erhöhung der Kohäsion zwischen der Klebemasse und der benachbarten Schicht können die Klebemasse und/oder die benachbarte Schicht einer Coronabehandlung unterzogen werden.

Auch Primer können zur Verbesserung der Haftvermittlung eingesetzt werden. Beschreibungen der üblicherweise verwendeten Primer finden sich zum Beispiel im "Handbook of Pressure Sensitive Adhesive Technology" von Donatas Satas (van Nostrand, 1989).

Die sechste Schicht, die von einer weiteren acrylatbasierten Haftklebemasse mit einem Flächengewicht von 300 bis 1500 g/m$^2$, vorzugsweise 360 bis 1500 g/m$^2$, weiter vorzugsweise 600 bis 1200 g/m$^2$ und/oder einer Dicke von 400 bis 1800 $\mu$m, vorzugsweise 500 bis 1500 $\mu$m, weiter vorzugsweise 800 bis 1200 $\mu$m gebildet wird, ist bevorzugt eine geschäumte, acrylatbasierende Klebemasse, wie sich beispielsweise von der Firma tesa unter der Bezeichnung ACX$^{plus}$ verfügbar sind.

Das ACX$^{plus}$-Sortiment umfasst ein- oder mehrlagige Klebebänder, die geschäumte Klebemassen auf Acrylatbasis aufweisen.

Derartige Klebebänder haben vorzugsweise eine Trägerschicht, die auch als Hartphase bezeichnet wird. Die Polymerbasis der Hartphase ist bevorzugt ausgewählt aus der Gruppe bestehend aus Polyvinylchloriden (PVC), Polyethylenterephthalaten (PET), Polyurethanen, Polyolefinen, Polybutylenterephthalaten (PBT), Polycarbonaten, Polymethylmethacrylaten (PMMA), Polyvinylbutyralen (PVB), Ionomeren und Mischungen aus zwei oder mehreren der vorstehend aufgeführten Polymere. Besonders bevorzugt ist die Polymerbasis der Hartphase ausgewählt aus der Gruppe bestehend aus Polyvinylchloriden, Polyethylenterephthalaten, Polyurethanen, Polyolefinen und Mischungen aus zwei oder mehreren der vorstehend aufgeführten Polymere. Die Hartphase ist im Wesentlichen eine Polymerfolie, deren Polymerbasis aus den vorstehenden Materialien ausgewählt ist. Unter einer "Polymerfolie" wird eine dünne, flächige, flexible, aufwickelbare Bahn verstanden, deren Materialbasis im Wesentlichen von einem oder mehreren Polymer(en) gebildet wird.

Unter "Polyurethanen" werden in weitgefasstem Sinne polymere Substanzen verstanden, in denen sich wiederholende Einheiten durch Urethan-Gruppierungen -NH-CO-O- miteinander verknüpft sind.

Unter "Polyolefinen" werden Polymere verstanden, die stoffmengenbezogen zu mindestens 50% Wiederholungseinheiten der allgemeinen Struktur -[-CH2-CR1R2-]n- enthalten, worin R1 für ein Wasserstoffatom und R2 für ein Wasserstoffatom oder für eine lineare oder verzweigte, gesättigte aliphatische oder cycloaliphatische Gruppe steht. Soweit die Polymerbasis der Hartphase Polyolefine umfasst, handelt es sich bei diesen besonders bevorzugt um Polyethylene, insbesondere um Polyethylene mit ultrahoher Molmasse (UHMWPE).

Unter der "Polymerbasis" wird das Polymer beziehungsweise werden die Polymere verstanden, das/die den größten Gewichtsanteil aller in der betreffenden Schicht beziehungsweise Phase enthaltenen Polymere ausmacht/ausmachen.

Die Dicke der Hartphase beträgt insbesondere $\leq$ 150 µm. Bevorzugt beträgt die Dicke der Hartphase 10 bis 150 µm, besonders bevorzugt 30 bis 120 µm und insbesondere 50 bis 100 µm, beispielsweise 70 bis 85 µm. Unter der "Dicke" wird die Ausdehnung der betreffenden Schicht beziehungsweise Phase entlang der z-Ordinate eines gedachten Koordinatensystems verstanden, bei dem die durch die Maschinenrichtung und die Querrichtung zur Maschinenrichtung aufgespannte Ebene die x-y-Ebene bildet. Die Dicke wird durch Messung an mindestens fünf verschiedenen Stellen der betreffenden Schicht beziehungsweise Phase und anschließende Bildung des arithmetischen Mittels aus den erhaltenen Messergebnissen ermittelt. Die Dickenmessung der Hartphase erfolgt dabei in Einklang mit DIN EN ISO 4593.

Derartige Klebebänder können weiterhin eine Weichphase aufweisen, die einen Polymerschaum, eine viskoelastische Masse und/oder eine elastomere Masse umfassen. Die Polymerbasis der Weichphase ist bevorzugt ausgewählt aus Polyolefinen, Polyacrylaten, Polyurethanen und Mischungen aus zwei oder mehreren der vorstehend aufgeführten Polymere.

In der einfachsten Variante besteht das Klebeband nur aus einer Weichphase.

Unter einem "Polymerschaum" wird ein Gebilde aus gasgefüllten kugel- oder polyederförmigen Zellen verstanden, welche durch flüssige, halbflüssige, hochviskose oder feste Zellstege begrenzt werden; ferner ist der Hauptbestandteil der Zellstege ein Polymer oder ein Gemisch mehrerer Polymere.

Unter einer "viskoelastischen Masse" wird ein Material verstanden, das neben Merkmalen der reinen Elastizität (Zurückkehren in den Ausgangszustand nach äußerer mechanischer Einwirkung) auch Merkmale einer viskosen Flüssigkeit zeigt, beispielsweise das Auftraten innerer Reibung bei Deformation. Insbesondere werden Haftklebemassen auf Polymerbasis als viskoelastische Massen angesehen.

Unter einer "elastomeren Masse" wird ein Material verstanden, das gummielastisches Verhalten aufweist und bei 20 °C wiederholt auf mindestens das Zweifache seiner Länge gedehnt werden kann und nach Aufhebung des für die Dehnung erforderlichen Zwanges sofort wieder annähernd seine Ausgangsdimension einnimmt.

Bezüglich des Verständnisses der Begriffe "Polymerbasis", "Polyurethane" und "Polyolefine" gilt das oben Gesagte. Unter "Polyacrylaten" werden Polymere verstanden, deren stoffmengenbezogene Monomerbasis zu mindestens 50% aus Acrylsäure, Methacrylsäure, Acrylsäureestern und/oder Methacrylsäureestern besteht, wobei Acrylsäureester und/oder Methacrylsäureester zumindest anteilig generell und bevorzugt zu mindestens 50% enthalten sind. Insbesondere wird unter einem "Polyacrylat" ein Polymerisat verstanden, welches durch radikalische Polymerisation von Acryl- und/oder Methylacrylmonomeren sowie gegebenenfalls weiteren, copolymerisierbaren Monomeren erhältlich ist.

Besonders bevorzugt ist die Polymerbasis der Weichphase ausgewählt aus Polyolefinen, Polyacrylaten und Mischungen aus zwei oder mehreren der vorstehend aufgeführten Polymere. Sofern Polyolefine zu der Polymerbasis der Weichphase gehören, sind diese bevorzugt ausgewählt aus Polyethylenen, Ethylen-Vinylacetat-Copolymeren (EVA) und Gemischen aus Polyethylenen und Ethylen-Vinylacetat-Copolymeren (PE/EVA-Blends). Die Polyethylene können dabei verschiedene Polyethylen-Typen sein, beispielsweise HDPE, LDPE, LLDPE, Blends aus diesen Polyethylen-Typen und/oder Gemische davon.

In einer Ausführungsform umfasst die Weichphase einen Schaum und jeweils eine ober- und unterhalb der geschäumten Schicht angeordnete Haftklebeschicht, wobei die Polymerbasis des Schaums aus einem oder mehreren Polyolefin(en) besteht und die Polymerbasis der Haftklebeschichten aus einem oder mehreren Polyacrylat(en) besteht.

Besonders bevorzugt besteht die Polymerbasis des Schaums dabei aus einem oder mehreren Polyethylen(en), Ethylen-Vinylacetat-Copolymer(en) und Gemischen aus einem oder mehreren Polyethylen(en) und/oder Ethylen-Vinylacetat-Copolymer(en). Ganz besonders bevorzugt besteht die Polymerbasis des Schaums dabei aus einem oder mehreren Polyethylen(en).

Der Polyolefin-basierte Schaum selbst ist nicht oder nur sehr wenig haftklebrig. Der Verbund mit der Hartphase beziehungsweise dem Substrat wird daher vorteilhaft durch die Haftklebeschichten bewirkt. Die Schäumung des Polyolefin-basierten Ausgangsmaterials des Schaums wird bevorzugt durch zugesetztes Treibgas im Sinne einer physikalischen Schäumung und/oder durch ein chemisches Schäumungsmittel, beispielsweise durch Azodicarbonsäurediamin, hervorgerufen.

In einer weiteren Ausführungsform ist die Weichphase ein haftklebriger Polymerschaum, dessen Polymerbasis aus einem oder mehreren Polyacrylaten besteht. "Haftklebriger Schaum" bedeutet, dass der Schaum selbst eine Haftklebemasse ist und somit ein Auftrag einer zusätzlichen Haftklebeschicht nicht erforderlich ist. Dies ist vorteilhaft, weil im Herstellungsprozess weniger Schichten zusammengefügt werden müssen und das Risiko von Ablösungserscheinungen und anderen unerwünschten Phänomenen an den Schichtgrenzen sinkt.

Die Polyacrylate sind bevorzugt erhältlich durch zumindest anteiliges Einpolymerisieren von funktionellen, mit Epoxidgruppen vernetzungsfähigen Monomeren. Besonders bevorzugt handelt es sich dabei um Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen; insbesondere bevorzugt sind carbonsäuregruppenhaltige Monomere. Es ist ganz besonders vorteilhaft, wenn die Polyacrylate einpolymerisierte Acrylsäure und/oder Methacrylsäure aufweisen. All diese Gruppen weisen eine Vernetzungsfähigkeit mit Epoxidgruppen auf, wodurch die Polyacrylate vorteilhaft einer thermischen Vernetzung mit eingebrachten Epoxiden zugänglich wird.

Weitere Monomere, die als Comonomere für die Polyacrylate verwendet werden können, sind neben Acrylsäure- und/oder Methacrylsäureestern mit bis zu 30 C-Atomen beispielsweise Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Die Eigenschaften des betreffenden Polyacrylats lassen sich insbesondere über eine Variation der Glasübergangstemperatur des Polymers durch unterschiedliche Gewichtsanteile der einzelnen Monomere beeinflussen. Die Polyacrylate können vorzugsweise auf die folgende Monomerzusammensetzung zurückgeführt werden:

a) Acrylsäureester und/oder Methacrylsäureester der folgenden Formel

$$CH_2 = C(R^I)(COOR^{II})$$

wobei $R^I$ = H oder $CH_3$ und $R^{II}$ ein Alkylrest mit 4 bis 14 C-Atomen ist,

b) olefinisch ungesättigte Monomere mit funktionellen Gruppen der für eine Reaktivität mit Epoxidgruppen bereits definierten Art,

c) optional weitere Acrylate und/oder Methacrylate und/oder olefinisch ungesättigte Monomere, die mit der Komponente (a) copolymerisierbar sind.

Bevorzugt beruhen die Polyacrylate auf einer Monomerenzusammensetzung, in der die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% enthalten sind (die Angaben sind bezogen auf die Monomermischung für das "Basispolymer", also ohne Zusätze eventueller Additive zu dem fertigen Polymer, wie Harze etc.). In diesem Fall weist das Polymerisationsprodukt eine Glastemperatur $\leq$ 15 °C (DMA bei geringen Frequenzen) und haftklebende Eigenschaften auf.

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigte Isomere, wie zum Beispiel 2 Ethylhexylacrylat oder 2 Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine.

Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

Beispielhafte Monomere der Komponente (c) sind:

Methylacrylat, Ethylacrylat, Propylacrylat, Methylmethacrylat, Ethylmethacrylat, Benzylacrylat, Benzylmethacrylat, sec-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethyl-methacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxy¬ethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluoro-butylmethacrylat, 2,2,3,3,4,4,5,5,6,6,7,7,8,8,8-Pentadecafluorooctylmethacrylat, Dimethyl-aminopropylacrylamid, Dimethylaminopropylmethacrylamid, N-(1-Methyl-undecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzyl-acrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol. Makromonomere wie 2-Polystyrolethylmethacrylat (Molekulargewicht $M_w$ von 4000 bis 13000 g/mol), Poly(methylmethacrylat)ethylmethacrylat ($M_w$ von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofufurylacrylat, N-tert-Butylacrylamid und Allylacrylat.

Die Herstellung der Polyacrylate ("Polyacrylate" wird im Rahmen der Erfindung als synonym mit "Poly(meth) acrylate" verstanden) kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Vorzugsweise werden die Polyacrylate durch Polymerisation der Monomere in Lösungsmitteln, insbesondere in Lösungsmitteln mit einem Siedebereich von 50 bis 150 °C, vorzugsweise von 60 bis 120 °C unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat, Benzpinacol. In einer sehr bevorzugten Vorgehensweise wird als radikalischer Initiator 2,2'-Azobis(2-methylbutyronitril) (Vazo® 67™ der Firma DuPont) oder 2,2'-Azobis(2-methylpropionitril) (2,2'-Azobisisobutyronitril; AIBN; Vazo® 64™ der Firma DuPont) verwendet.

Als Lösungsmittel für die Herstellung der Polyacrylate kommen Alkohole wie Methanol, Ethanol, n-und iso-Propanol, n-und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%,

bevorzugt 3 bis 10 Gew.-%, bezogen auf das eingesetzte Lösungsmittelgemisch, enthalten, vorgezogen werden.

Bevorzugt erfolgt nach der Herstellung (Polymerisation) der Polyacrylate eine Aufkonzentration, und die weitere Verarbeitung der Polyacrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte $M_W$ der Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 500.000 g/mol

Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.)

Das Polyacrylat hat vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität des Polymerisats.

Besonders geeignet sind Polyacrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Polyacrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letzteres besonders gut geeignet ist. Beispiele für derartige Polyacrylate, die nach dem RAFT-Verfahren hergestellt werden, sind in der US 6,765,078 B2 und US 6,720,399 B2 beschrieben. Auch über N-Oxyle lassen sich entsprechende Polyacrylate herstellen, wie beispielsweise in der EP 1 311 555 B1 beschrieben ist. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden. Die unterschiedlichen Möglichkeiten der ATRP sind in den Schriften US 5,945,491 A, US 5,854,364 A und US 5,789,487 A beschrieben.

Die Monomere zur Herstellung der Polyacrylate enthalten bevorzugt anteilig funktionelle Gruppen, die geeignet sind, mit Epoxidgruppen Verknüpfungsreaktionen einzugehen. Dies ermöglicht vorteilhaft eine thermische Vernetzung der Polyacrylate durch Reaktion mit Epoxiden. Unter Verknüpfungsreaktionen werden insbesondere Additions- und Substitutionsreaktionen verstanden. Bevorzugt kommt es also zu einer Verknüpfung der die funktionellen Gruppen tragenden Bausteine mit Epoxidgruppen tragenden Bausteinen, insbesondere im Sinne einer Vernetzung der die funktionellen Gruppen tragenden Polymerbausteine über Epoxidgruppen tragende Vernetzermoleküle als Verknüpfungsbrücken. Bei den epoxidgruppenhaltigen Substanzen handelt es sich bevorzugt um multifunktionelle Epoxide, also solche mit mindestens zwei Epoxidgruppen; entsprechend kommt es bevorzugt insgesamt zu einer mittelbaren Verknüpfung der die funktionellen Gruppen tragenden Bausteine.

Das Polyacrylat beziehungsweise die Polyacrylate sind bevorzugt durch Verknüpfungsreaktionen - insbesondere im Sinne von Additions- oder Substitutionsreaktionen - von in ihnen enthaltenen funktionellen Gruppen mit thermischen Vernetzern vernetzt. Es können alle thermischen Vernetzer verwendet werden, die sowohl eine ausreichend lange Verarbeitungszeit gewährleisten, sodass es nicht zu einer Vergelung während des Verarbeitungsprozesses kommt, als auch zu einer schnellen Nachvernetzung des Polymers auf den gewünschten Vernetzungsgrad bei niedrigeren Temperaturen als der Verarbeitungstemperatur, insbesondere bei Raumtemperatur, führen. Möglich ist beispielsweise eine Kombination aus Carboxyl-, Amin- und/oder Hydroxygruppen enthaltenden Polymeren und Isocyanten als Vernetzer, insbesondere den in der EP 1 791 922 A1 beschriebenen aliphatischen oder mit Aminen deaktivierten trimerisierten Isocyanaten.

Geeignete Isocyanate sind insbesondere trimerisierte Derivate von MDI [4,4-Methylen-di(phenylisocyanat)], HDI [Hexamethylendiisocyanat, 1,6-Hexylendiisocyanat] und/oder IPDI [Isophorondiisocyanat, 5-Isocyanato-1-isocyanatomethyl-1,3,3-trimethylcyclohexan], beispielsweise die Typen Desmodur® N3600 und XP2410 (jeweils BAYER AG: Aliphatische Polyisocyanate, niedrigviskose HDI-Trimerisate). Ebenfalls geeignet ist die oberflächendeaktivierte Dispersion von mikronisiertem trimerisiertem IPDI BUEJ 339®, jetzt HF9 ® (BAYER AG).

Grundsätzlich zur Vernetzung geeignet sind aber auch andere Isocyanate wie Desmodur VL 50 (Polyisocyanate am MDI-Basis, Bayer AG), Basonat F200WD (aliphatisches Polyisocyanat, BASF AG), Basonat HW100 (wasseremulgierbares polyfunktionelles Isocyanat auf HDI-Basis, BASF AG), Basonat HA 300 (allophanatmodifiziertes Polyisocyanat auf Isocyanurat. HDI-Basis, BASF) oder Bayhydur VPLS2150/1 (hydrophil modifiziertes IPDI, Bayer AG).

Bevorzugt wird der thermische Vernetzer, beispielsweise das trimerisierte Isocyanat, zu 0,1 bis 5 Gew.-%, insbesondere zu 0,2 bis 1 Gew.-%, bezogen auf die Gesamtmenge des zu vernetzenden Polymers, eingesetzt.

Bevorzugt umfasst der thermische Vernetzer mindestens eine epoxidgruppenhaltige Substanz. Bei den epoxidgruppenhaltigen Substanzen handelt es sich insbesondere um multifunktionelle Epoxide, also solche mit zumindest zwei Epoxidgruppen; entsprechend kommt es insgesamt zu einer mittelbaren Verknüpfung der die funktionellen Gruppen tragenden Bausteine. Die epoxidgruppenhaltigen Substanzen können sowohl aromatische als auch aliphatische Verbindungen sein.

Hervorragend geeignete multifunktionelle Epoxide sind Oligomere des Epichlorhydrins, Epoxyether mehrwertiger Alkohole (insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche), Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanillin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureresten ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.

Sehr geeignete Ether sind beispielsweise 1,4-Butandioldiglycidether, Polyglycerol-3-Glycidether, Cyclohexandimethanoldiglycidether, Glycerintriglycidether, Neopentylglykol-diglycidether, 1,6-Hexandioldiglycid¬ether), Polypropylen-glykoldiglycidether, Trimethylolpropantriglycidether, Penta¬erythrittetraglycidether, Bisphenol-A-diglycidether und Bisphenol-F-diglycidether.

Besonders bevorzugt ist die Verwendung eines beispielsweise in der EP 1 978 069 A1 beschriebenen Vernetzer-Beschleuniger-Systems ("Vernetzungssystem"), um eine bessere Kontrolle sowohl über die Verarbeitungszeit, Vernetzungskinetik sowie den Vernetzungsgrad zu erhalten. Das Vernetzer-Beschleuniger-System umfasst zumindest eine epoxidgruppenhaltige Substanz als Vernetzer und zumindest eine bei einer Temperatur unterhalb der Schmelztemperatur des zu vernetzenden Polymers für Vernetzungsreaktionen mittels epoxidgruppenhaltigen Verbindungen beschleunigend wirkende Substanz als Beschleuniger.

Als Beschleuniger werden besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine , die mit den Bausteinen der zu vernetzenden Polymere keine oder nur geringfüge Reaktionen eingehen.

Prinzipiell können als Beschleuniger sowohl primäre ($NRH_2$), sekundäre ($NR_2H$) als auch tertiäre Amine ($NR_3$) gewählt werden, selbstverständlich auch solche, die mehrere primäre und/oder sekundäre und/oder tertiäre Amingruppen aufweisen. Besonders bevorzugte Beschleuniger sind aber tertiäre Amine wie beispielweise Triethylamin, Triethylendiamin, Benzyldimethylamin, Dimethylamino-methylphenol, 2,4,6-Tris-(N,N-dimethylaminomethyl)-phenol, N,N'-Bis(3-(dimethylamino)propyl)harnstoff. Als Beschleuniger können vorteilhaft auch multifunktionelle Amine wie Diamine, Triamine und/oder Tetramine eingesetzt werden. Hervorragend geeignet sind zum Beispiel Diethylentriamin, Triethylentetramin, Trimethylhexamethylendiamin.

Als Beschleuniger werden darüber hinaus bevorzugt Aminoalkohole verwendet. Besonders bevorzugt werden sekundäre und/oder tertiäre Aminoalkohole eingesetzt, wobei im Falle mehrerer Aminfunktionalitäten pro Molekül bevorzugt mindestens eine, bevorzugt alle Aminfunktionalitäten sekundär und/oder tertiär sind. Als bevorzugte Aminoalkohol-Beschleuniger können Triethanolamin, N,N-Bis(2-hydroxypropyl)ethanolamin, N-Methyldiethanolamin, N-Ethyldiethanolamin, 2-Aminocyclohexanol, Bis(2-hydroxycyclohexyl)methylamin, 2-(Diisopropylamino)ethanol, 2-(Dibutylamino)ethanol, N-Butyldiethanolamin, N-Butylethanolamin, 2-[Bis(2-hydroxyethyl)amino]-2-(hydroxymethyl)-1,3-propandiol, 1-[Bis(2-hydroxyethyl)amino]-2-propanol, Triisopropanolamin, 2-(Dimethylamino)ethanol, 2-(Diethylamino)ethanol, 2-(2-Dimethylaminoethoxy)ethanol, N,N,N'-Trimethyl-N'-hydroxyethylbisaminoethylether, N,N,N'-Trimethylaminoethylethanolamin und/oder N,N,N'-Trimethylaminopropylethanolamin eingesetzt werden.

Weitere geeignete Beschleuniger sind Pyridin, Imidazole (wie beispielsweise 2-Methylimidazol) und 1,8-Diazabicyclo[5.4.0]undec-7-en. Auch cycloaliphatische Polyamine können als Beschleuniger eingesetzt werden. Geeignet sind auch Beschleuniger auf Phosphatbasis wie Phosphine und/oder Phosphoniumverbindungen, wie beispielsweise Triphenylphosphin oder Tetraphenylphosphoniumtetraphenylborat.

Weiterhin kann es vorgesehen sein, dass auch ein an sich haftklebriger Polymerschaum mit einer aus Polyacrylat(en) bestehenden Polymerbasis ober- und/oder unterseitig mit einer Haftklebemasse beschichtet ist, wobei die Polymerbasis dieser Haftklebemasse bevorzugt ebenfalls aus Polyacrylaten besteht. Es können alternativ andere

beziehungsweise anders vorbehandelte Klebeschichten, also beispielsweise Haftklebeschichten und/oder hitzeaktivierbare Schichten auf der Basis anderer Polymere als Poly(meth)acrylate zu der geschäumten Schicht kaschiert werden. Geeignete Basispolymere sind Naturkautschuke, Synthesekautschuke, Acrylatblockcopolymere, Vinylaromatenblockcopolymere, insbesondere Styrolblockcopolymere, EVA, Polyolefine, Polyurethane, Polyvinylether und Silikone. Bevorzugt enthalten diese Schichten keine nennenswerten Anteile an migrierfähigen Bestandteilen, die mit dem Material der geschäumten Schicht so gut verträglich sich, dass sie in signifikanter Menge in die geschäumte Schicht diffundieren und dort die Eigenschaften verändern.

Generell kann die Weichphase des Klebebandes mindestens ein klebrig machendes Harz enthalten. Als klebrig machende Harze sind insbesondere aliphatische, aromatische und/oder alkylaromatische Kohlenwasserstoffharze, Kohlenwasserstoffharze auf Basis reiner Monomere, hydrierte Kohlenwasserstoffharze, funktionelle Kohlenwasserstoffharze sowie Naturharze einsetzbar. Bevorzugt ist das klebrig machende Harz ausgewählt aus der Gruppe umfassend Pinen-, Inden- und Kolophoniumharze, deren disproportionierte, hydrierte, polymerisierte und/oder veresterte Derivate und Salze, Terpenharze und Terpenphenolharze sowie C5-, C9- und andere Kohlenwasserstoffharze. Auch Kombinationen dieser und weiterer Harze können vorteilhaft eingesetzt werden, um die Eigenschaften der resultierenden Klebmasse wunschgemäß einzustellen. Besonders bevorzugt ist das klebrig machende Harz ausgewählt aus der Gruppe umfassend Terpenphenolharze und Kolophoniumester.

Die Weichphase des Klebebandes kann einen oder mehrere Füllstoffe enthalten. Der oder die Füllstoff(e) kann/können in einer oder in mehreren Schichten der Weichphase vorliegen.

Bevorzugt umfasst die Weichphase einen Polymerschaum, und der Polymerschaum enthält teil- oder vollexpandierte Mikroballons, insbesondere, wenn die Polymerbasis des Polymerschaums ein oder mehrere Polyacrylat(e) umfasst und ganz besonders bevorzugt, wenn die Polymerbasis des Polymerschaums aus einem oder mehreren Polyacrylat(en) besteht. Bei Mikroballons handelt es sich um elastische Hohlkugeln, die eine thermoplastische Polymerhülle aufweisen; sie werden daher auch als expandierbare polymere Mikrosphären oder als Mikrohohlkugeln bezeichnet. Diese Kugeln sind mit niedrigsiedenden Flüssigkeiten oder verflüssigtem Gas gefüllt. Als Hüllenmaterial finden insbesondere Polyacrylnitril, Polyvinyldichlorid (PVDC), Polyvinylchlorid (PVC), Polyamide oder Polyacrylate Verwendung. Als niedrigsiedende Flüssigkeit sind insbesondere niedere Alkane, beispielsweise Isobutan oder Isopentan geeignet, die als verflüssigtes Gas unter Druck in der Polymerhülle eingeschlossen sind. Durch ein physikalisches Einwirken auf die Mikroballons, beispielsweise durch eine Wärmeeinwirkung - insbesondere durch Wärmezufuhr oder -erzeugung, hervorgerufen zum Beispiel durch Ultraschall oder Mikrowellenstrahlung - erweicht einerseits die äußere Polymerhülle, gleichzeitig geht das in der Hülle befindliche flüssige Treibgas in seinen gasförmigen Zustand über. Bei einer bestimmten Paarung von Druck und Temperatur - auch als kritische Paarung bezeichnet - dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, wie zum Beispiel von der Firma Akzo Nobel die Expancel DU-Typen (dry unexpanded), welche sich im Wesentlichen über ihre Größe (6 bis 45 μm Durchmesser im unexpandierten Zustand) und ihre zur Expansion benötigte Starttemperatur (75 °C bis 220 °C) differenzieren.

Weiterhin sind unexpandierte Mikroballontypen auch als wässrige Dispersion mit einem Feststoffbeziehungsweise Mikroballonanteil von ca. 40 bis 45 Gew.-% erhältlich, darüber hinaus auch als polymergebundende Mikroballons (Masterbatche), zum Beispiel in Ethylen-Vinylacetat mit einer Mikroballonkonzentration von ca. 65 Gew.-%. Ferner sind sogenannte Mikroballon-Slurry-Systeme erhältlich, bei denen die Mikroballons mit einem Feststoffanteil von 60 bis 80 Gew.-% als wässrige Dispersion vorliegen. Sowohl die Mikroballon-Dispersionen, die Mikroballon-Slurrys als auch die Masterbatche sind wie die DU-Typen zur Schäumung eines in der Weichphase des Klebebandes enthaltenen Polymerschaums geeignet.

Besonders bevorzugt enthält der Polymerschaum Mikroballons, die im nicht expandierten Zustand bei 25 °C einen Durchmesser von 3 μm bis 40 μm, insbesondere von 5 μm bis 20 μm, und/oder nach Expansion einen Durchmesser von 10 μm bis 200 μm, insbesondere von 15 μm bis 90 μm, aufweisen.

Bevorzugt enthält der Polymerschaum bis zu 30 Gew.-% Mikroballons, insbesondere zwischen 0,5 Gew.-% und 10 Gew.-%, jeweils bezogen auf die Gesamtmasse des Polymerschaums.

Der Polymerschaum der Weichphase des Klebebandes - sofern diese einen Polymerschaum umfasst - ist bevorzugt gekennzeichnet durch die weitgehende Abwesenheit von offenzelligen Hohlräumen. Besonders bevorzugt weist der Polymerschaum einen Anteil von Hohlräumen ohne eigene Polymerhülle, also von offenzelligen Kavernen, von nicht mehr als 2 Vol-% auf, insbesondere von nicht mehr als 0,5 Vol.-%. Der Polymerschaum ist somit bevorzugt ein geschlossenzelliger Schaum.

Optional kann die Weichphase des Klebebandes auch pulver- und/oder granulatförmige Füllstoffe, Farbstoffe und Pigmente, insbesondere auch abrasive und verstärkende Füllstoffe wie zum Beispiel Kreiden (CaCOs), Titandioxide, Zinkoxide und Ruße auch zu hohen Anteilen, das heißt von 0,1 bis 50 Gew.-%, bezogen auf die Gesamtmasse der Weichphase, enthalten.

Weiterhin können schwerentflammbare Füllstoffe wie beispielsweise Ammoniumpoly-phosphat; elektrisch

leitfähige Füllstoffe wie beispielsweise Leitruß, Kohlenstofffasern und/oder silberbeschichtete Kugeln; thermisch leitfähige Materialien wie beispielsweise Bornitrid, Aluminiumoxid, Siliciumcarbid; ferromagnetische Additive wie beispielsweise Eisen-(III)-oxide; weitere Additive zur Volumenerhöhung, wie beispielsweise Blähmittel, Glasvollkugeln, Glashohlkugeln, carbonisierte Mikrokugeln, phenolische Mikrohohlkugeln, Mikrokugeln aus anderen Materialien; Kieselsäure, Silicate, organisch nachwachsende Rohstoffe wie beispielsweise Holzmehl, organische und/oder anorganische Nanopartikel, Fasern; Alterungsschutzmittel, Lichtschutzmittel, Ozonschutzmittel und/oder Compoundierungsmittel in der Weichphase enthalten sein. Als Alterungsschutzmittel können bevorzugt sowohl primäre, zum Beispiel 4-Methoxyphenol oder Irganox® 1076, als auch sekundäre Alterungsschutzmittel, zum Beispiel Irgafos® TNPP oder Irgafos® 168 der Firma BASF, gegebenenfalls auch in Kombination miteinander, eingesetzt werden. Als weitere Alterungsschutzmittel können Phenothiazin (C-Radikalfänger) sowie Hydrochinonmethylether in Gegenwart von Sauerstoff sowie Sauerstoff selbst eingesetzt werden.

Die Dicke der Weichphase beträgt vorzugsweise 200 bis 1800 μm, besonders bevorzugt 300 bis 1500 μm, insbesondere 400 bis 1000 μm. Die Dicke der Weichphase wird nach ISO 1923 bestimmt.

Die Verbindung von Hart- und Weichphase beziehungsweise auch von in der Hart- und/oder Weichphase vorgesehenen Schichten untereinander zum Klebeband kann beispielsweise durch Laminieren, Kaschieren oder Coextrusion erfolgen. Es ist möglich, dass Hart- und Weichphase direkt, das heißt unmittelbar, miteinander verbunden sind. Ebenso ist es möglich, dass zwischen Hart- und Weichphase eine oder mehrere haftvermittelnde Schicht(en) angeordnet ist/sind. Das Klebeband kann darüber hinaus weitere Schichten enthalten.

Bevorzugt ist mindestens eine der miteinander zu verbindenden Schichten, stärker bevorzugt sind mehrere der miteinander zu verbindenden Schichten und ganz besonders bevorzugt sind alle der miteinander zu verbindenden Schichten mit Corona- (mit Luft oder Stickstoff), Plasma- (Luft, Stickstoff oder andere reaktive Gase beziehungsweise reaktive, als Aerosol einsetzbare Verbindungen) oder Flammenvorbehandlungsmethoden vorbehandelt.

Vorzugsweise haben alle Schichten in dem Stanzling die gleiche Form und Größe und sind deckungsgleich angeordnet.

Eine typische Größe für den Stanzling, mit dem viele der kleineren Löcher verschlossen werden können, stellt eine (kreisrunde) Scheibe mit einem Durchmesser von 10 bis 100 mm, insbesondere 20 bis 60 mm, ganz insbesondere 30 bis 40 mm dar.

Das erfindungsgemäße Verfahren zum Verschließen einer Öffnung wie ein Loch insbesondere in einer Karosserie mit einem erfindungsgemäßen Stanzling besteht einfach darin, den Stanzling auf der zu verschließenden Öffnung derart aufzubringen, dass die Öffnung vollständig von dem Stanzling abgedeckt ist

Bevorzugt ist, wenn der Stanzling konzentrisch über der zu verschließenden Öffnung aufgebracht ist.

Vorteilhaft entsprechen die Konturen des Stanzling der Kontur der zu verschließenden Öffnung. Auf diese Weise ergibt sich ein symmetrischer Überstand der einzelnen Schichten des Stanzlings. Der Überstand beträgt vorzugsweise zwischen 1 und 20 mm, vorzugsweise zwischen 3 und 20 mm, weiter vorzugsweise zwischen 5 und 10 mm.

Der erfindungsgemäße Stanzling ist besonders bei erhöhter mechanischer Beanspruchung den aus dem Stand der Technik bekannten Lösungen überlegen.

Der Stanzling zeichnet sich aus durch:

- eine sehr hohe Flammfestigkeit
- eine sehr hohe Belastbarkeit/ Reißfestigkeit/Durchstoßfestigkeit
- sehr gute Abdichtung gegen Feuchtigkeit/Feuchtigkeitsbarriere
- sehr gute Abdichtung gegen Geräusche/Lärmdämpfung
- Überlackierbarkeit
- PVC-Haftung

Gemäß einer vorteilhaften Ausführungsform der Erfindung weist der Stanzling Durchstoßfestigkeiten von 200 bis 2000 N auf.

Die Oberfläche des Stanzteiles bietet eine ansprechende sowie glatte Oberfläche in den Punkten Optik und Haptik und ist deswegen gut überlackierbar.

## Prüfmethoden

Die Messungen werden (sofern nichts anderes angegeben ist) bei einem Prüfklima von 23 ± 1 °C und 50 ± 5 % rel. Luftfeuchte durchgeführt.

## Molmasse Mn und gewichtsmittlere Molmasse Mw sowie Polydispersität PD

Die Angaben der zahlenmittleren Molmasse Mn und der gewichtsmittleren Molmasse Mw sowie der Polydisperistät PD in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C.

Als Vorsäule wird eine Säule Typ PSS-SDV, 10 µm, $10^3$ Å, 8,0 mm * 50 mm (Angaben hier und im Folgenden in der Reihenfolge: Typ, Partikelgrösse, Porosität, Innendurchmesser * Länge; 1 Å = $10^{-10}$ m) verwendet. Zur Auftrennung wird eine Kombination der Säulen des Typs PSS-SDV, 10 µm, $10^3$ Å sowie $10^5$ Å und $10^7$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute.

Die Kalibrierung wird mittels des kommerziell verfügbaren ReadyCal-Kit Poly(styrene) high der Firma PSS Polymer Standard Service GmbH, Mainz, durchgeführt. Diese wird anhand der Mark-Houwink-Parameter K und alpha universell in Polymethylmethacrylat (PMMA) umgerechnet, sodass die Angabe der Daten in PMMA-Massenäquivalenten erfolgt.

**K-Wert**

Das Prinzip der Methode beruht auf der kapillarviskosimetrischen Bestimmung der relativen Lösungsviskosität. Hierzu wird die Testsubstanz in Toluol durch dreißigminütiges Schütteln aufgelöst, so dass man eine 1 %-ige Lösung erhält. In einem Vogel-Ossag-Viskosimeter wird bei 25 °C die Auslaufzeit gemessen und daraus in Bezug auf die Viskosität des reinen Lösungsmittels die relative Viskosität der Probenlösung bestimmt. Aus Tabellen kann nach Fikentscher [P. E. Hinkamp, Polymer, 1967, 8, 381] der K-Wert abgelesen werden (K = 1000 k).

**Glasübergangstemperatur**

Die Glasübergangstemperatur wird mittels dynamischer Scanning Kalorimetrie (DSC) bestimmt. Dazu werden 5 mg einer unbehandelten Polymerprobe in ein Aluminiumtiegelchen (Volumen 25 µL) eingewogen und mit einem gelochten Deckel verschlossen. Zur Messung wird ein DSC 204 F1 der Firma Netzsch verwendet. Es wird zwecks Inertisierung unter Stickstoff gearbeitet. Die Probe wird zunächst auf -150 °C abgekühlt, dann mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt.

Die Glasübergangstemperatur wird folgendermaßen ausgewertet (siehe Figur 2):
An die Basislinie des Thermogramms vor ① und nach ② der Stufe wird jeweils eine Tangente angelegt. Im Bereich der Stufe wird eine Ausgleichsgerade ⑤ parallel zur Ordinate so gelegt, dass sie die beiden Tangenten schneidet, und zwar so, dass zwei Flächen ③ und ④ (zwischen der jeweils einen Tangente, der Ausgleichsgeraden und der Messkurve) gleichen Inhalts entstehen. Der Schnittpunkt der so positionierten Ausgleichsgeraden mit der Messkurve ergibt die Glasübergangstemperatur

**Klebkraft**

Die Bestimmung der Klebkraft (gemäß AFERA 5001) wird wie folgt durchgeführt. Als definierter Haftgrund wird galvanisch verzinktes Stahlblech mit einer Stärke von 2 mm (Bezug von der Firma Rocholl GmbH) eingesetzt. Das zu untersuchende verklebbare Flächenelement wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

**Durchstoßfestigkeit**

Mit der Durchstoßfestigkeit wird die maximale Belastungskraft eines über einem Loch verklebten Stanzlings beim Durchstoßen (beispielsweise für den Lochversschluss in der Automobilindustrie) bestimmt.

Mit einem kreisförmigen Stanzling wird ein Loch in einem Blech verschlossen. Die Prüfung erfolgt entweder sofort nach der Verklebung oder nach der vorgegebenen Lagerbedingung. Die dabei aufgenommene Maximalkraft wird als Ergebnis Durchstoßfestigkeit in N angegeben Die maximale Kraft zum Durchstoßen des Prüflings wird mittels einer Zugprüfmaschine ermittelt. Dabei belastet die Zugprüfmaschine das verklebte Stanzteil mittig mit einem Stempel, der sich mit 300 mm/min nach unten bewegt, bis eine Eindringtiefe von 20 mm erreicht ist.

Die Methodik beruht auf der Verwendung einer Zugprüfmaschine, in welche in den oberen Kraftaufnehmer ein

Dorn eingespannt wird, der sich mit konstanter Geschwindigkeit (300 mm/min) auf ein horizontal positioniertes Loch in einem Blech, welches wiederum mit dem Stanzteil verschlossen ist, zubewegt. Als Loch wird dabei ein kreisrunder Ausschnitt mit 30 mm im Durchmesser gewählt. Das Stahlblech weist eine Stärke von 0,7 mm auf und wird auf einem Ring platziert, so dass der Dorn beim Eindrücken des Lochverschlusses bis 20 mm durch das Loch fahren kann. Die Dornspitze ist abgerundet und stellt den Kopf einer Flachrundschraube nach ISO 8677, mit einem Durchmesser von 20 mm und einer Bogenhöhe von 3 mm, dar, welcher an einen Aufnehmer geschweißt worden ist. Die Kraft, die notwendig ist, um den Dorn 20 mm durch das Loch zu drücken, wird gemessen. Bei sehr guter Blechhaftung korreliert dieser Wert mit den Zugdehnungseigenschaften des schichtförmigen Körpers in Längs- und Querrichtung.

Der zu prüfende Stanzling (kreisförmig, 50 mm im Durchmesser) wird möglichst mittig und ohne Lufteinschlüsse über dem Loch des Bleches platziert und mit einer 4 kg-Stahlrolle angerollt (fünfmal hin und her mit 10 m/min über die gesamte Breite des Stanzlings). Die Prüfung findet, sofern nichts anderes angegeben ist, nach weniger als 10 min nach dem Verkleben statt (Sofortprüfung).

Der Test kann sowohl trägerseitig als auch masseseitig durchgeführt werden. Falls nicht anders angegeben, wird er trägerseitig durchgeführt, das heißt, die Trägerseite des Stanzlings zeigt nach oben.

Der Prüfling wird so auf dem Prüflingshalter platziert und fixiert, dass der Stanzling mittig auf dem Halter und mittig unter dem Stempel liegt. Anschließend wird die Maschine mit einer Geschwindigkeit von 300 mm/min gestartet und der Stanzling nach unten durch das Loch im Blech gedrückt. Der Test endet, wenn die Eindringtiefe von 20 mm erreicht ist, auch, wenn der Prüfling dabei nur eingedrückt und noch nicht durchstoßen ist.

Die Durchstoßfestigkeit ist der Mittelwert aus drei Einzelergebnissen.

Wurde der Stanzling nicht durchstoßen oder löste sich die Verklebung, wird das Ergebnis mit dem Vorzeichen "größer/gleich" angegeben.

**Brandtests**

Auf einem KTL-Blech (20), in dem ein kreisrundes Loch mit einem Lochdurchmesser von 30 mm wird ein Stanzteil (10) mit einem Stanzteildurchmesser von 50 mm konzentrisch aufgebracht.

Das Stanzteil wird zuvor für 30 min bei 160 °C in einem Ofen vorbehandelt.

Anschließend wird gewartet, bis sich der Stanzling auf Raumtemperatur abgekühlt hat. Die Wartezeit umfasst eine Zeitspanne von mindestens zwei Stunden.

Mit einem Bunsenbrenner (40) wird die äußere Oberfläche des Stanzteils beflammt, so dass sich eine Temperatur von 1000 °C +/- 100 °C am Temperatursensor (30) vom Typ K unmittelbar und mittig vor dem Stanzling einstellt.

Es gibt eine vertikale Prüfung (Muster vertikal, Flamme horizontal) und eine horizontale Prüfung (Muster horizontal, Flamme vertikal).

In Figur 3a ist die vertikale Prüfung, und in Figur 3b ist die horizontale Prüfung gezeigt.

Im Folgenden soll anhand einer Figur der Stanzling zum dauerhaften Verschließen von Löchern insbesondere in Blechen oder in Kunststoffteilen von Automobilkarosserien näher erläutert werden, ohne in irgendeiner Form einschränkend wirken zu sollen.

Es zeigt

Figur 1 eine Öffnung wie ein Loch in einer Karosserie, das es zu verschließen gilt, sowie den Zustand, nachdem das zu verschließende Loch verschlossen ist.

In der Karosserie 20 ist ein Loch 50 konstruktiv bedingt vorhanden, das es zu verschließen gilt. Hierzu wird ein Stanzling 10 mit einem Träger mit folgendem Aufbau

| | |
|---|---|
| 1 | Nadelvlies |
| 12 | Klebmasse |
| 2 | Glasgelege |
| 3 | Klebemasse |
| 4 | Aluminiumfolie |
| 5 | Geschäumte Acrylatklebemasse |

derart auf dem Loch 50 fixiert, dass das Loch 50 vollständig vom Stanzling 10 abgedeckt ist.

Die Fläche des Stanzlings 10 ist größer als die Fläche des zu verschließenden Loches 50, so dass das Loch 50 vollflächig verschlossen ist.

Im Folgenden wird die Erfindung durch zwei Beispiele näher erläutert, ohne die Erfindung damit einschränken zu wollen.

**Beispiel**

| | | |
|---|---|---|
| Schicht 1: | PAN-Nadelvlies | 3 mm, 850 $g/m^2$ |
| Schicht 2: | Glasgelege | 80 $g/m^2$ |
| Schicht 4: | Aluminiumfolie | 10 $\mu m$ |
| Schicht 5: | Geschäumte Acrylatklebemasse | 800 $\mu m$ |

| | | |
|---|---|---|
| Schicht 1: | PAN-Nadelvlies | 3 mm, 850 $g/m^2$ |
| Schicht 12: | Klebemasse | 7 $g/m^2$ |
| Schicht 2: | Glasgelege | 80 $g/m^2$ |
| Schicht 3: | Klebemasse | 7 $g/m^2$ |
| Schicht 4: | Aluminiumfolie | 10 $\mu m$ |
| Schicht 5: | Geschäumte Acrylatklebemasse | 800 $\mu m$ |

**Vergleichsbeispiel**

In den Vergleichsbeispielen werden die Schicht 1, das PAN-Nadelvlies, sowie die optionalen Schichten 12 und 3 durch die jeweils in der Tabelle aufgeführte Schicht ersetzt und ebenfalls dem vertikalen Brandtest (Temperaturen von 1000 °C, bis zu einer Dauer von mindestens 10 min) unterzogen.

Dabei zeigt sich, dass keine Schicht einen Stanzling ergibt, der vergleichbar gut den Brandtest besteht. Dabei ist das Versagen im Durchbruch der Flamme durch das Loch definiert.

| Material | Lieferant / Produktbezeichnung | Dicke / FG* des Trägermaterials | Pro | Contra | Zeit bis zum Versagen |
|---|---|---|---|---|---|
| Aluminium - Glasgelege - Verbund in Form eines Klebebands | Firma tesa SE tesa® 54332 | 1060 µm | nicht entflammbar | geringe Temperaturbeständigkeit von 500 °C | 21 Sekunden |
| Polyimid-Folie mit Silikon Klebmasse | Firma tesa SE tesa® 51408 | 65 µm | schwer entflammbar | geringe Temperaturbeständigkeit von 300 °C (Schmelzen) | 68 Sekunden |
| Aluminiumklebeband | Firma tesa SE tesa® 50575 | 80 µm | nicht entflammbar | Wärmeleitung, Klebemasse schmilzt | 17 Sekunden |
| Folie aus Polyurethanacrylat | Firma tesa SE | 100 $g/m^2$ | - | leicht entflammbar | 17 Sekunden |
| PET-Folie, aluminisiert | Firma Coveme | 125 µm | - | Wärmeleitung, PET und Klebmasse schmelzen | 16 Sekunden |
| Mit Schichtsilikaten (Phlogopit) beschichtetes Glasgelege | Firma Mica Tapes Europe | 60 µm (1)<br>80 µm (2)<br>100 µm (3)<br>110 µm (4) | nicht entflammbar, sehr hohe Temperaturbeständigkeit ca. 1000 °C, gute Isolation bei niedrigeren Temperaturen | Isolation bei hohen Temperaturen nicht mehr gegeben,<br>Schmelzen der Klebmasse | 21 Sekunden (1)<br>27 Sekunden (2)<br>32 Sekunden (3)<br>29 Sekunden (4) |
| Glasgewebe, dünn | Firma Jiangsu Jiuding New Material Co Ltd. / EP 200Y | 180 µm | nicht entflammbar, flexibel | Wärmeleitung, Schmelzen der Klebmasse, Ausfransen an den Kanten, Haftung der Klebmasse gering | 131 Sekunden |
| Glasgewebe, offenporig | Firma Jiangsu Jiuding New Material Co Ltd. JD 512FR | 110 µm | nicht entflammbar | Flamme gelangt durch die offenen Stellen im Gewebe, Ausfransen an den Kanten, Haftung der Klebmasse gering | 25 Sekunden |
| Aramidfasern und funktionale Wirkstoffkombination mittels Nitril-Butadien-Binder verbunden | Firma Frenzelit / Novaform 2500 | 1000 µm | gute Isolation bei niedrigeren Temperaturen, Flächengewicht | zwar für den HT Bereich ausgelegt, aber (schwer) entflammbar | 123 Sekunden |
| HT Papiere (SiO2, CaO, MgO) | Firma DBW HT Papier 607 high | 2000 µm | nicht entflammbar, sehr hohe Temperaturbeständigkeit ca. 1000 °C, gute Isolation | Stäube, offenporig, Haftung der Klebmasse gering | 60 Sekunden |

(fortgesetzt)

| Material | Lieferant / Produktbezeichnung | Dicke / FG* des Trägermaterials | Pro | Contra | Zeit bis zum Versagen |
|---|---|---|---|---|---|
| Silikatwolle ($SiO_2$, $Al_2O_3$) | Firma DBW power-mat® S | 4000 µm | nicht entflammbar, sehr gute Isolation | Stäube (ggf. krebserregend), Ausfransen, schwierige Handhabung, Haftung der Klebmasse gering | 300 Sekunden |
| Silikatgewebe | Firma Fingerhuth / silTEX® 1608.VC2.LD (1)<br>silTEX® 1615.HTLE.T (2) | 800 µm (1)<br>1500 µm (2) | nicht entflammbar | Ausfransen an den Kanten, Haftung der Klebmasse gering, teilw. offenporig | 142 Sekunden (1)<br>235 Sekunden (2) |
| Glasgewebe, dick | Firma Jiangsu Jiuding New Material Co Ltd. BWT600-83 | 400 µm | nicht entflammbar, gute Isolation | Ausfransen an den Kanten, Haftung der Klebmasse gering | aufgrund der schlechten Haftungseigenschaften zur Klebmasse nicht dieser Prüfung unterzogen |
| Aerogelmatten | Firma Stadur Pyrogel 2250 | 2500 µm | nicht entflammbar | steif, staubig, Haftung der Klebmasse nicht stabil | aufgrund der schlechten Haftungseigenschaften zur Klebmasse nicht dieser Prüfung unterzogen |
| Para-Aramidgewebe (Kevlar) | Firma Fingerhuth | 3000 µm | - | geringe Temperaturbeständigkeit von 350 °C | aufgrund der geringen Temperaturbeständigkeit nicht dem Test unterzogen |
| **Vierbeziehungsweise sechsschichtiger Aufbau mit PAN-Nadelvlies (erfindungsgemäß)** | kombiTEX® 1030.DF1.A1/10 Firma Fingerhuth Heat Protection | 3 mm<br>850 $g/m^2$ 2 | nicht entflammbar, legt sich wie ein Schutzmantel über Klebmasse, gute Isolation gegen Wärme | versagt NICHT im Brandtest | ≥ 10 min |

*: FG: Flächengewicht

Die Vorteile des erfindungsgemäßen Stanzlings gegenüber dem Stand der Technik sind:

- Feuerfestigkeit bis Temperaturen von 1000 °C und bis zu einer Dauer von mindestens 10 min in beiden Brandtests
- Kälteschlagfestigkeit
- sauberes Verkleben und kein Ausquetschen der Klebmasse
- ausreichende Haftung der flammgeschützten Schaumschicht zur acrylatbasierten Haftklebemasse (im Unterschied zu vielen Vergleichsprodukten kein kohäsiver Bruch zwischen den Schichten)

## Patentansprüche

1. Stanzling (10) insbesondere zum dauerhaften Verschließen von Löchern insbesondere in Blecher oder in Kunststoffteilen mit einem Träger aus einem Laminat in der angegebenen Schichtreihenfolge aus mindestens einer ersten Schicht, die von einem Nadelvlies (1) mit einer Dicke von 1 bis 6 mm gebildet wird, wobei das Nadelvlies mechanisch vernadelte, oxidierte und thermisch stabilisierte Polyacrylnitril-(PAN)-Fasern enthält, optional mindestens einer zweiten Schicht, die von einer Haftklebemasse (12) in Form eines Kaschierklebers insbesondere mit einem Flächenauftragsgewicht von 5 bis 50 g/m$^2$ gebildet wird, mindestens einer dritten Schicht, die von einem Glasgewebe oder Glasgelege (2) mit einem Flächengewicht von 30 bis 200 g/m$^2$ gebildet wird, optional mindestens einer vierten Schicht, die von einer Haftklebemasse (3) in Form eines Kaschierklebers insbesondere mit einem Flächenauftragsgewicht von 5 bis 50 g/m$^2$ gebildet wird, mindestens einer fünften Schicht, die von einer metallischen Schicht (4) mit einer Dicke von 5 bis 40 $\mu$m gebildet wird, und mindestens einer sechsten Schicht, die von einer acrylatbasierten Haftklebemasse (5) mit einem Flächengewicht von 300 bis 1800 g/m$^2$, vorzugsweise 360 bis 1500 g/m$^2$ und/oder einer Dicke von 400 bis 1800 $\mu$m, vorzugsweise 800 bis 1500 $\mu$m gebildet wird.

2. Stanzling nach Anspruch 1,
**dadurch gekennzeichnet, dass**
die metallische Schicht eine Dicke von 8 bis 20 $\mu$m, weiter vorzugsweise 10 bis 12 $\mu$m, aufweist.

3. Stanzling nach einem der Ansprüche 1 oder 2,
**dadurch gekennzeichnet, dass**
es sich bei der metallischen Schicht um eine gewalzte Metall-, insbesondere Aluminiumfolie handelt.

4. Stanzling nach zumindest einem der Ansprüche 1 bis 3,
**dadurch gekennzeichnet, dass**
die dritte Schicht aus Glasgewebe oder Glasgelege ein Flächengewicht zwischen 60 und 120 g/m$^2$, insbesondere zwischen 70 und 100 g/m$^2$, weiter insbesondere zwischen 80 und 90 g/m$^2$ aufweist.

5. Stanzling nach zumindest einem der vorherigen Ansprüche,
**dadurch gekennzeichnet, dass**
sich das Glasgewebe oder -gelege in einer Polymerschicht befindet, beispielsweise auf Basis von Polyurethan, und zwar derart, dass alle Filamente des Glasgewebes oder -geleges möglichst vollständig von dem Polymer umschlossen sind.

6. Stanzling nach zumindest einem der vorherigen Ansprüche,
**dadurch gekennzeichnet, dass**
die Fadenzahl in der Kette und/oder die Fadenzahl im Schuss bei der zweiten Schicht aus Glasgewebe oder Glasgelege 20 bis 40/cm, vorzugsweise 25 bis 30/cm beträgt.

7. Stanzling nach zumindest einem der vorherigen Ansprüche,
**dadurch gekennzeichnet, dass**
zwischen der ersten Schicht aus dem Nadelvlies und der dritten Schicht in Form eines Glasgewebes oder -geleges und/oder zwischen der dritten Schicht in Form eines Glasgewebes oder -geleges und der metallischen Schicht jeweils eine Klebeschicht in Form eines Kaschierklebers vorhanden ist, und zwar bevorzugt mit einem Flächenauftragsgewicht von 5 bis 50 g/m$^2$, insbesondere von 7 bis 20 g/m$^2$.

8. Stanzling nach zumindest einem der vorherigen Ansprüche,
**dadurch gekennzeichnet, dass**
die sechste Schicht, die von einer weiteren Haftklebemasse mit einem Flächengewicht von 300 bis 1800 g/m$^2$

gebildet wird, eine geschäumte, acrylatbasierende Klebemasse ist.

**9.** Stanzling nach zumindest einem der vorherigen Ansprüche, **dadurch gekennzeichnet, dass** der Stanzling konzentrisch über der zu verschließenden Öffnung aufgebracht ist.

**10.** Stanzling nach zumindest einem der vorherigen Ansprüche, **dadurch gekennzeichnet, dass** die Konturen des Stanzlings der Kontur der zu verschließenden Öffnung entsprechen, insbesondere dass der Überstand zwischen 1 und 20 mm, weiter vorzugsweise zwischen 5 und 10 mm beträgt.

**11.** Öffnung (50) insbesondere in einer Karosserie (20) mit einem Stanzling nach zumindest einem der vorherigen Ansprüche.

## Claims

**1.** Diecut (10) especially for the permanent closing of holes especially in metal sheets or in plastics parts having a carrier composed of a laminate in the specified layer sequence, of

at least one first layer, which is formed by a needlefelt web (1) having a thickness of 1 to 6 mm, wherein the needlefelt web comprises mechanically needled, oxidized and thermally stabilized polyacrylonitrile (PAN) fibers,
optionally at least one second layer, which is formed by a pressure-sensitive adhesive (12) in the form of a laminating adhesive in particular having a unit area coat weight of 5 to 50 $g/m^2$,
at least one third layer, which is formed by a woven glass fabric or laid glass fabric (2) having a basis weight of 30 to 200 $g/m^2$,
optionally at least one fourth layer, which is formed by a pressure-sensitive adhesive (3) in the form of a laminating adhesive in particular having a unit area coat weight of 5 to 50 $g/m^2$,
at least one fifth layer, which is formed by a metallic layer (4) having a thickness of 5 to 40 $\mu$m, and
at least one sixth layer, which is formed by an acrylate-based pressure-sensitive adhesive (5) having a basis weight of 300 to 1800 $g/m^2$, preferably 360 to 1500 $g/m^2$ and/or a thickness of 400 to 1800 $\mu$m, preferably 800 to 1500 $\mu$m.

**2.** Diecut according to Claim 1, **characterized in that** the metallic layer has a thickness of 8 to 20 $\mu$m, more preferably 10 to 12 $\mu$m.

**3.** Diecut according to either of Claims 1 and 2, **characterized in that** the metallic layer is a rolled metal foil, more particularly aluminum foil.

**4.** Diecut according to at least one of Claims 1 to 3, **characterized in that** the third layer of woven glass fabric or laid glass fabric has a basis weight of between 60 and 120 $g/m^2$, more particularly between 70 and 100 $g/m^2$, further in particular between 80 and 90 $g/m^2$.

**5.** Diecut according to at least one of the preceding claims, **characterized in that** the woven or laid glass fabric is situated in a polymer layer, based for example on polyurethane, and specifically such that all of the filaments of the woven or laid glass fabric are surrounded by the polymer as completely as possible.

**6.** Diecut according to at least one of the preceding claims, **characterized in that** the warp thread count and/or the weft thread count for the second layer of woven glass fabric or laid glass fabric is 20 to 40/cm, preferably 25 to 30/cm.

**7.** Diecut according to at least one of the preceding claims, **characterized in that**

between the first layer made of the needlefelt web and the third layer in the form of a woven or laid glass fabric and/or between the third layer in the form of a woven or laid glass fabric and the metallic layer there is a respective adhesive layer in the form of a laminating adhesive, preferably with a unit area coat weight of 5 to 50 g/$m^2$, more particularly of 7 to 20 g/$m^2$.

**8.** Diecut according to at least one of the preceding claims,
**characterized in that**
the sixth layer, which is formed by a further, pressure-sensitive adhesive having a basis weight of 300 to 1800 g/$m^2$, is a foamed, acrylate-based adhesive.

**9.** Diecut according to at least one of the preceding claims,
**characterized in that**
the diecut is applied concentrically over the opening to be closed.

**10.** Diecut according to at least one of the preceding claims,
**characterized in that**
the contours of the diecut correspond to the contour of the opening to be closed, more particularly such that the margin of overlap is between 1 and 20 mm, more preferably between 5 and 10 mm.

**11.** Opening (50) especially in a vehicle body (20) with a diecut according to at least one of the preceding claims.

**Revendications**

**1.** Pièce découpée (10) destinée en particulier à l'obturation durable de trous, notamment dans des tôles ou des pièces en matière plastique,

comprenant un support constitué d'un stratifié composé, dans l'ordre de couches indiqué,
d'au moins une première couche, formée par un non-tissé aiguilleté (1) d'une épaisseur de 1 à 6mm, le non-tissé aiguilleté contenant des fibres de polyacrylonitrile (PAN) aiguilletées mécaniquement, oxydées et stabilisées thermiquement,
optionnellement, d'au moins une deuxième couche, formée d'un adhésif sensible à la pression (12) sous la forme d'une colle de contre-collage, notamment d'un grammage de 5 à 50g/$m^2$,
d'au moins une troisième couche, formée par un tissu de verre ou une nappe de verre (2), d'un grammage de 30 à 200g/$m^2$,
optionnellement, d'au moins une quatrième couche, formée par un adhésif sensible à la pression (3) sous la forme d'une colle de contre-collage, notamment d'un grammage de 5 à 50g/$m^2$,
d'au moins une cinquième couche, formée par une couche métallique (4) d'une épaisseur de 5 à 40$\mu$m, et
d'au moins une sixième couche, formée d'adhésif sensible à la pression à base d'acrylate (5) d'un poids surfacique de 300 à 1800g/$m^2$, de préférence de 360 à 1500g/$m^2$, et/ou d'une épaisseur de 400 à 1800$\mu$m, de préférence de 800 à 1500$\mu$m.

**2.** Pièce découpée selon la revendication 1,
**caractérisée en ce que**
la couche métallique a une épaisseur de 8 à 20$\mu$m, de préférence de 10 à 12$\mu$m.

**3.** Pièce découpée selon l'une des revendications 1 ou 2,
**caractérisée en ce que**
la couche métallique est une feuille métallique laminée, en particulier une feuille d'aluminium.

**4.** Pièce découpée selon au moins une des revendications 1 à 3,
**caractérisée en ce que**
la troisième couche de tissu de verre ou en nappe de verre a un poids surfacique compris entre 60 et 120g/$m^2$, en particulier entre 70 et 100g/$m^2$, et plus particulièrement encore, entre 80 et 90g/$m^2$.

**5.** Pièce découpée selon au moins une des revendications précédentes,
**caractérisée en ce que**
le tissu ou la nappe de verre se trouve dans une couche de polymère, par exemple à base de polyuréthane, de telle

sorte que tous les filaments du tissu ou de la nappe de verre soient entourés le plus complètement possible par le polymère.

**6.** Pièce découpée selon au moins une des revendications précédentes,
**caractérisée en ce que**
le nombre de fils dans la chaîne et/ou le nombre de fils dans la trame de la deuxième couche de tissu de verre ou de nappe de verre est de 20 à 40/cm, de préférence de 25 à 30/cm.

**7.** Pièce découpée selon au moins une des revendications précédentes,
**caractérisée en ce que**
entre la première couche de non-tissé aiguilleté et la troisième couche sous forme de tissu ou de nappe de verre, et/ou entre la troisième couche sous forme de tissu ou de nappe de verre et la couche métallique, se trouve à chaque fois une couche adhésive sous forme d'une colle de contre-collage, et de préférence avec un grammage de 5 à $50g/m^2$, en particulier de 7 à $20g/m^2$.

**8.** Pièce découpée selon au moins une des revendications précédentes,
**caractérisée en ce que**
la sixième couche, qui est formée d'un autre adhésif sensible à la pression d'un grammage de 300 à $1800g/m^2$, est un adhésif à base d'acrylate expansé.

**9.** Pièce découpée selon au moins une des revendications précédentes,
**caractérisée en ce que**
la pièce découpée est appliquée de manière concentrique sur l'ouverture à fermer.

**10.** Pièce découpée selon au moins une des revendications précédentes,
**caractérisée en ce que**
les contours de la pièce découpée correspondent au contour de l'ouverture à fermer, en particulier par le fait que la saillie est comprise entre 1 et 20mm, de préférence entre 5 et 10mm.

**11.** Ouverture (50) en particulier dans une carrosserie (20) avec une pièce découpée selon au moins une des revendications précédentes.

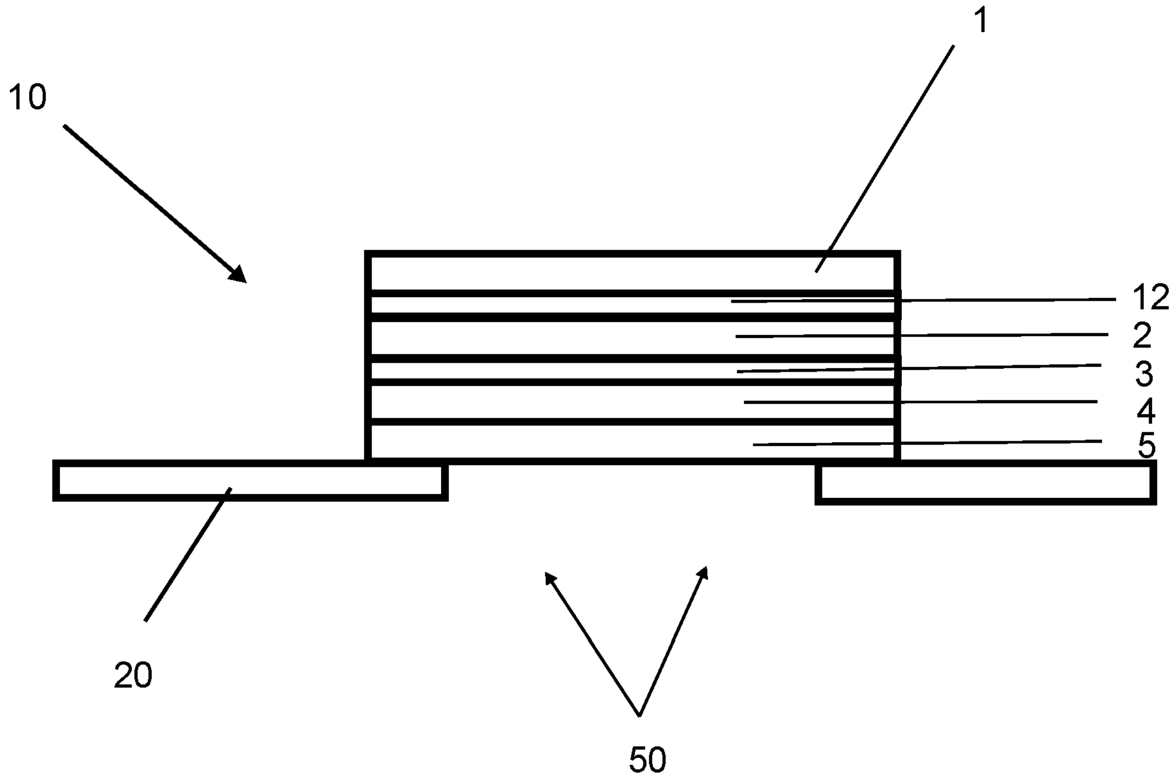


Fig. 1

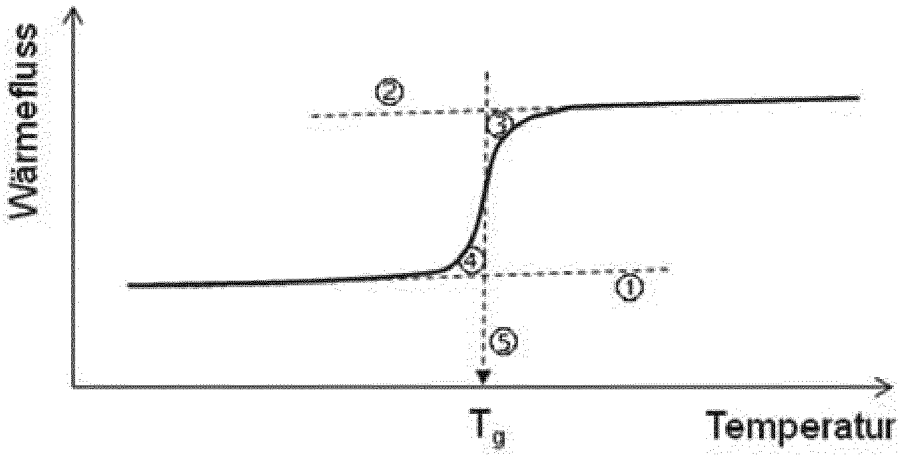


Figur 2

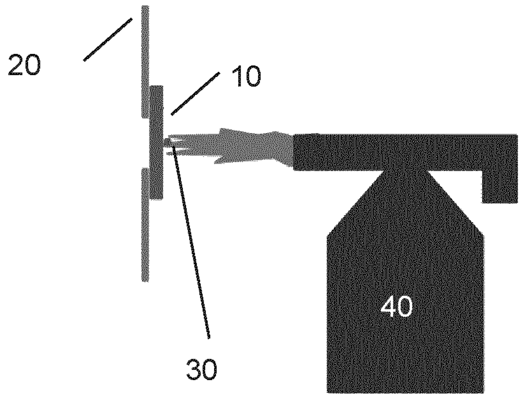


Figur 3a

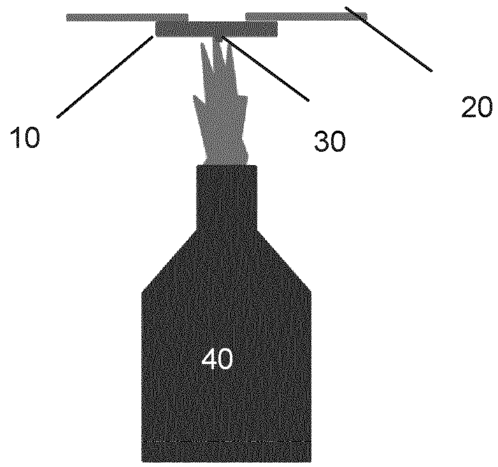


Figur 3b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3036100 A1
- US 4387176 A
- DE 4313008 A1
- EP 0578151 A
- EP 2520627 A1
- EP 2522705 A1
- EP 2520628 A1
- EP 2695926 A1
- EP 2520629 A1
- EP 1378527 B1
- EP 1978069 A1
- US 6765078 B2
- US 6720399 B2
- EP 1311555 B1
- US 5945491 A
- US 5854364 A
- US 5789487 A
- EP 1791922 A1


### In der Beschreibung aufgeführte Nicht-Patentliteratur


- Vliesstoffe - Rohstoffe, Herstellung, Anwendung, Eigenschaften, Prüfung. Wiley-VCH Verlag, 2012
- **PETER A. LOVELL** ; **MOHAMED S. EI-AASSER**. Emulsion Polymerization and Emulsion Polymers. Wiley-VCH, 1997
- Produktion von C-zentrierten Radikalen. **HOUBEN WEYL**. Methoden der Organischen Chemie, vol. E 19a, 60-147
- **P. E. HINKAMP**. Polymer. 1967, vol. 8, 381